(19)

Europäisches Patentamt
European Patent Office
Office européen des brevets

(11) **EP 4 459 480 A1**

(12) **EUROPEAN PATENT APPLICATION**
published in accordance with Art. 153(4) EPC

(43) Date of publication:
06.11.2024 Bulletin 2024/45

(21) Application number: 22913905.0

(22) Date of filing: 21.11.2022

(51) International Patent Classification (IPC):
*G06F 16/33* (2019.01)

(52) Cooperative Patent Classification (CPC):
G06F 16/33; G06F 16/34; G06F 40/35

(86) International application number:
PCT/CN2022/133166

(87) International publication number:
WO 2023/124647 (06.07.2023 Gazette 2023/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.12.2021 CN 202111662331

(71) Applicant: Iflytek Co., Ltd.
Hefei, Anhui 230088 (CN)

(72) Inventors:
• YAN, Li
  Hefei, Anhui 230088 (CN)
• QI, Ting
  Hefei, Anhui 230088 (CN)
• GAO, Jianqing
  Hefei, Anhui 230088 (CN)
• SUN, Jingting
  Hefei, Anhui 230088 (CN)

(74) Representative: Prinz & Partner mbB
Patent- und Rechtsanwälte
Rundfunkplatz 2
80335 München (DE)

(54) **SUMMARY DETERMINATION METHOD AND RELATED DEVICE THEREOF**

(57) Provided are a summary determination method and a related device thereof; the method comprises: obtaining a user record to be used and a record text to be used (S1), then performing sentence division processing on the record text to be used so as to obtain at least one sentence to be used (S2); then performing semantic matching processing on the user record to be used and said sentences to be used so as to obtain a semantic matching result to be used (S3); finally, according to the user record to be used and the semantic matching result to be used, determining summary content (S4). According to the semantic matching result to be used, the degree of semantic matching between the user record to be used and at least one sentence in the record text to be used can be represented, such that the user can quickly find, on the basis of the "semantic matching result to be used", conference content related to the user record to be used from from the record text to be used, so that the summary determination efficiency can be effectively improved.

FIG. 1

EP 4 459 480 A1

## Description

The present application claims the priority to Chinese patent application No. 202111662331.8, titled "SUMMARY DETERMINATION METHOD AND RELATED DEVICE THEREOF", filed on December 30, 2021 with the China National Intellectual Property Administration, which is incorporated herein by reference in its entirety.

## FIELD

The present application relates to the technical field of natural language processing, and more particularly, to a minutes determining method and a related device thereof.

## BACKGROUND

In some application scenarios (e.g., meetings, lectures), some participants (e.g., recorders) generally record some concise information points to summarize speech of a speaker, for example, content summaries, conclusions in meetings, or important matters that need to be followed up on. These participants can subsequently write minutes content (e.g., meeting summaries, report summaries, etc.), based on these user records.

In addition, in order to write the minutes content accurately, these participants generally need to re-listen to the recorded meeting audio (or the recorded lecture audio) and write the minutes content on the basis of the user records.

However, since these participants need a large amount of time to re-listen to the recorded meeting audio, it is required to consume a long time to determine the minutes content, thereby rendering a relatively low efficiency in determining of the minutes.

## SUMMARY

In order to solve the above technical problem, a minutes determining method and a related device thereof are provided according to embodiments of the present application, to improve the efficiency in determining of the minutes.

A minutes determining method is provided according to an embodiment of the present application. The method includes: acquiring a to-be-used user record and a to-be-used record text; performing sentence segmentation processing on the to-be-used record text, to obtain at least one to-be-used sentence; performing semantic matching processing on the to-be-used user record and the at least one to-be-used sentence, to obtain a to-be-used semantic matching result; and determining to-be-used minutes content according to the to-be-used user record and the to-be-used semantic matching result.

A minutes determining device is provided according to an embodiment of the present application. The device includes: an information acquiring unit configured to acquire a to-be-used user record and a to-be-used record text; a text segmenting unit configured to perform sentence segmentation processing on the to-be-used record text, to obtain at least one to-be-used sentence; a semantic matching unit configured to perform semantic matching processing on the to-be-used user record and the at least one to-be-used sentence, to obtain a to-be-used semantic matching result; and a minutes determining unit configured to determine to-be-used minutes content according to the to-be-used user record and the to-be-used semantic matching result.

An apparatus is provided according to an embodiment of the present application. The apparatus includes: a processor, a memory, and a system bus, where the processor and the memory are connected through the system bus; one or more programs are stored in the memory, the one or more programs comprise instructions, and the instructions, when executed by the processor, cause the processor to perform any one of the implementations of the above minutes determining method provided in an embodiment of the present application.

A computer-readable storage medium having instructions stored therein is provided according to an embodiment of the present application, where the instructions, when run on a terminal device, cause the terminal device to perform any one of the implementations of the above minutes determining method provided in an embodiment of the present application.

A computer program product is provided according to an embodiment of the present application, where the computer program product, when run on a terminal device, causes the terminal device to perform any one of the implementations of the above minutes determining method provided in an embodiment of the present application.

Based on the above technical solution, the present application provides the following beneficial effects.

In the technical solution provided in the present application, after the to-be-used user record and the to-be-used record text are obtained, first sentence segmentation processing can be performed on the to-be-used record text to obtain at least one to-be-used sentence; then semantic matching processing is performed on the to-be-used user record and the to-be-used sentence to obtain a to-be-used semantic matching result; and finally, the to-be-used minutes content is determined according to the to-be-used user record and the to-be-used semantic matching result.

Here, since the above "to-be-used semantic matching result" can represent a semantic matching degree between the to-be-used user record and at least one sentence in the to-be-used record text, the user can quickly determine a position of the to-be-used user record in the to-be-used record text based on the "to-be-used semantic matching result". In this way, the user can quickly find meeting content related to the to-be-used user record in the to-be-used record text based on the "to-be-used semantic matching result", such that it is possible to effectively avoid time consumed by the user in determining the meeting content related to the to-be-used user record through re-listening to the recorded meeting audio, thereby effectively improving the minutes determining efficiency.

In addition, in the embodiments of the present application, at least one key supplementary sentence can be determined based on the above "to-be-used semantic matching result". The key supplementary sentence can represent semantic supplementary information for the to-be-used user record. As such, the user can acquire more comprehensive important meeting semantics in determining the to-be-used minutes content with reference to the key supplementary sentence, the target sentences, and the to-be-used user record. In this way, the leak of the to-be-used user record can be found and filled, thus being advantageous to determine the minutes accurately.

In addition, in the embodiments of the present application, the key-point content can be extracted from each key supplementary sentence. The key-point content can more concisely represent important information missed by the to-be-used user record, enabling the user to learn key-point supplementary information of the to-be-used user record from the key-point content more quickly, thereby being advantageous to improve the efficiency in determining the minutes.

## BRIEF DESCRIPTION OF THE DRAWINGS

In order to describe the embodiments of the present disclosure or the technical solutions in the existing technologies more clearly, accompanying drawings required for the description of the embodiments or the existing technologies will be made briefly below. Apparently, the accompanying drawings described below are merely some of the embodiments of the present disclosure, and those skilled in the art can obtain other drawings according to these drawings without any inventive effort.

FIG. 1 is a flow chart of a minutes determining method according to an embodiment of the present application;
FIG. 2 is a schematic diagram of an interface for displaying prompt information according to an embodiment of the present application;
FIG. 3 is a schematic diagram showing an operation principle of a semantic matching model according to an embodiment of the present application;
FIG. 4 is a schematic diagram showing an operation principle of another semantic matching model according to an embodiment of the present application;
FIG. 5 is a schematic diagram of a to-be-used graph according to an embodiment of the present application;
FIG. 6 is a schematic diagram showing an operation principle of a key-point extraction model according to an embodiment of the present application;
FIG. 7 is a schematic diagram of a prompt information updating process according to an embodiment of the present application; and
FIG. 8 is a schematic structural diagram of a minutes determining device according to an embodiment of the present application.

## DETAILED DESCRIPTION OF EMBODIMENTS

The inventors, in their study of a process for determining minutes, found that, during listening to a meeting, a minutes writer usually records some concise information points to summarize speech content of a speaker, for example, content summary, conclusions in the meeting, or important matters required to be followed up on. Further, after the meeting, the minutes writer may firstly re-listen to the recorded audio of the meeting with reference to the user record, and determine some meeting contents related to the user record, such as, meeting speech sentences and/or key-point supplementary sentences corresponding to the user record). Then, the minutes writer may write the meeting minutes with reference to the user record and related meeting contents, so that the meeting minutes can be more accurate. However, due to a relatively long duration of the recorded audio for recording a long-time meeting, the minutes writer needs to consume a large amount of time to acquire the meeting contents related to the user record, which results in a relatively long time to write the meeting minutes, thus rendering a relatively low efficiency in determining the minutes.

Based on the above finding, in order to solve the technical problem in the background part, a minutes determining method is provided in an embodiment of the present application. In the method, after the to-be-used user record and the to-be-used record text are obtained, sentence segmentation processing can be performed on the to-be-used record text to obtain at least one to-be-used sentence; then semantic matching processing is performed on the to-be-used user record and the to-be-used sentence to obtain a to-be-used semantic matching result; and finally, the to-be-used minutes content is determined according to the to-be-used user record and the to-be-used semantic matching result.

Here, since the above "to-be-used semantic matching result" can represent a semantic matching degree between the to-be-used user record and at least one sentence in the to-be-used record text, the user can quickly determine a position of the to-be-used user record in the to-be-used record text based on the "to-be-used semantic matching result". In this way, the user can quickly find meeting content related to the to-be-used user record in the to-be-used record text based on the "to-be-used semantic matching result", such that it is possible to effectively avoid time consumed by the user in determining the meeting content related to the to-be-used user record through re-listening to the recorded meeting audio.

In addition, an execution subject of the minutes determining method is not limited in the embodiments of the present application. For example, the minutes determining method provided in the embodiments of the present application may be applied to a data processing device such as a terminal device or a server. The terminal device may be a smartphone, a computer, a Personal Digital Assitant (PDA), a tablet computer, or the like. The server may be a standalone server, a cluster server, or a cloud server. As another example, the minutes determining method provided in the embodiments of the present application may be performed by cooperation of a terminal device with a server.

In order that the objects, technical solutions, and advantages of the embodiments of the present application may be made clearer, the technical solutions in the embodiments of the present application will be clearly and completely described with reference to the accompanying drawings of the embodiments of the present application. It will be apparent that the described embodiments are some, but not all, embodiments of the present application. Based on the embodiments in the present application, all other embodiments obtained by a person of ordinary skill in the art without involving any inventive effort fall within the scope of the present application.

## Method Embodiment 1

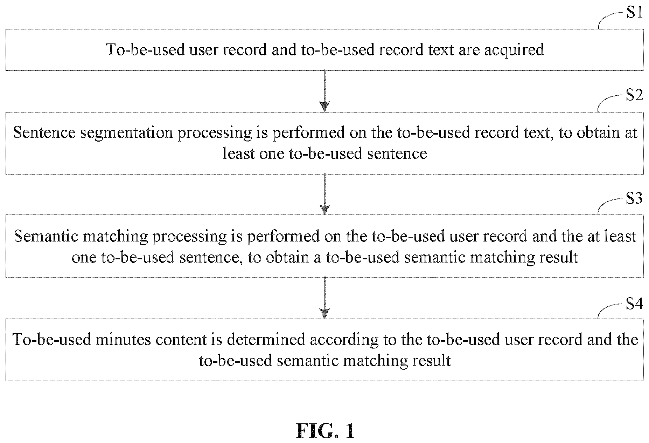

Referring to FIG. 1, a flow chart of a minutes determining method according to an embodiment of the present application is shown.

The minutes determining method provided in the embodiment of the present application includes S1-S4.

In S1, a to-be-used user record and a to-be-used record text are acquired.

The "to-be-used user record" represents concise information (e.g., shorthand content, note content, or meeting point record) recorded by a relevant person (e.g., a minutes writer, a meeting stenographer) in a process of listening to a meeting. For example, the above "to-be-used user record" may include contents such as a supervision loophole, insufficient authority, a low efficiency, and an obvious efficiency loophole in decentralized management.

In addition, the above "to-be-used user record" is not limited in the embodiments of the present application, which may include, for example, a word, a short sentence, or a complete sentence.

In addition, a process of acquiring the above "to-be-used user record" is not limited in the embodiments of the present application. For example, the process may include: acquiring meeting note information uploaded by a user; segmenting the meeting note information according to a preset segmentation marker to obtain at least one note segmentation unit; deleting a meaningless symbol (for example, ellipses, dashes, or a paragraph number at the beginning of a sentence) in each note segmentation unit; and determining each note segmentation unit obtained after the deletion to be the to-be-used user record, so that the to-be-used user record includes only one sentence as far as possible.

It should be noted that the above "preset segmentation marker" may be set in advance (for example, set by the user in accordance with personal preferences). For example, it may be punctuation for ending the sentence (e.g., a full stop, a question mark, or an exclamation mark).

In order to facilitate understanding of the process of acquiring the "to-be-used user record" described above, description will be made in combination with an example below.

As an example, if the above "meeting note information" includes "a supervision loophole, insufficient authority, a low efficiency, ..., and an obvious efficiency loophole in decentralized management. It is suggested that... to reach an agreement, and unify rules in futures and various derivatives", two to-be-used user records can be determined from the "meeting note information" as follows:

-> to-be-used user record 1: "a supervision loophole, insufficient authority, a low efficiency, and an obvious efficiency loophole in decentralized management"; and
-> to-be-used user record 2: "It is suggested to reach an agreement, and unify rules in futures and various derivatives".

The above "to-be-used record text" refers to speech content in a meeting. The process of acquiring the "to-be-used record text" is not limited in the embodiments of the present application. For example, the process of acquiring the "to-be-used record text" may specifically include: performing speech transcription processing on real-time meeting speech to obtain the to-be-used record text in a process of listening to the meeting. For another example, the process of acquiring the "to-be-used record text" may include: performing speech recognition processing on the recorded meeting video (or the recorded meeting audio) after the meeting, to obtain the to-be-used record text. For yet another example, the process of acquiring the "to-be-used record text" may include: performing speech translation processing on the recorded meeting video in a translation scene, to obtain the to-be-used record text.

Based on the related contents of the above S1, when a user wants to prepare minutes content for a certain meeting, the to-be-used user record can be extracted from the meeting note information uploaded by the user for the meeting, so that a text position of the to-be-used user record in the to-be-used record text for the meeting can be subsequently determined.

In S2, sentence segmentation processing is performed on the to-be-used record text, to obtain at least one to-be-used sentence.

In an embodiment of the present application, after the to-be-used record text is acquired, the sentence segmentation processing is performed on the to-be-used record text according to a preset sentence end marker (for example, a full stop, a question mark, or an exclamation mark), to obtain a sentence set of the to-be-used record text. The sentence set includes sentences in the to-be-used record text. Each sentence in the sentence set is determined as a to-be-used sentence.

In S3, semantic matching processing is performed on the to-be-used user record and the at least one to-be-used sentence, to obtain a to-be-used semantic matching result.

The above "to-be-used semantic matching result" is used to record a semantic matching degree (e.g., semantic matching score) between the to-be-used user record and each to-be-used sentence. Thus, the "to-be-used semantic matching result" can represent whether semantic information carried in the to-be-used user record is identical with semantic information carried in each to-be-used sentence.

Additionally, an implementation of S3 is not limited in the embodiments of the present application. S3 may be implemented, for example, by using any of the existing or future semantic matching methods. For another example, in order to improve a semantic matching effect, any implementation of S3 shown in Method Embodiment 2 may be used.

In S4, to-be-used minutes content is determined according to the to-be-used user record and the to-be-used semantic matching result.

The above "to-be-used minutes content" refers to minutes content written by the user based on the to-be-used user record.

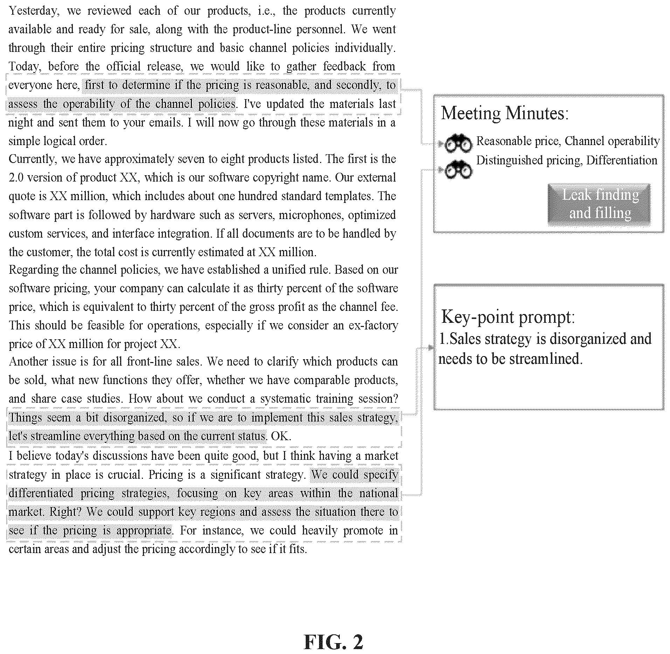

In addition, an implementation of S4 is not limited in the embodiments of the present application. For example, when the above "to-be-used semantic matching result" includes a semantic matching score between the to-be-used user record and each to-be-used sentence, S4 may be specifically performed by: firstly selecting one or more to-be-used sentences with relatively-high semantic matching scores, from all the to-be-used sentences according to the semantic matching score between the to-be-used user record and each to-be-used sentence; and then displaying, to the user, the to-be-used user record and these to-be-used sentences with the relatively-high semantic matching score (as shown in FIG. 2). As such, the user can write the to-be-used minutes content based on the displayed content, thereby enabling the user to quickly find content required for writing the minutes from the displayed content. In this way, it is possible to effectively avoid time consumed by the user in determining the meeting content related to the to-be-used user record through re-listening to the recorded meeting audio, thereby effectively improving the efficiency in determining the minutes.

For another example, to further improve the minutes determination effect, S4 may be performed in any implementations of S4 shown in Method Embodiment 4, Method Embodiment 5, Method Embodiment 6, and Method Embodiment 7 below.

It can be seen from the related contents of S1 to S4 that, for the minutes determining method provided in the embodiments of the present application, the to-be-used user record and the to-be-used record text are acquired; sentence segmentation processing can be performed on the to-be-used record text to obtain at least one to-be-used sentence; then semantic matching processing is performed on the to-be-used user record and the to-be-used sentence to obtain a to-be-used semantic matching result; and finally, the to-be-used minutes content is determined according to the to-be-used user record and the to-be-used semantic matching result.

Here, since the above "to-be-used semantic matching result" can represent a semantic matching degree between the to-be-used user record and at least one sentence in the to-be-used record text, the user can quickly determine a position of the to-be-used user record in the to-be-used record text based on the "to-be-used semantic matching result". In this way, the user can quickly find meeting content related to the to-be-used user record in the to-be-used record text based on the "to-be-used semantic matching result", such that it is possible to effectively avoid time consumed by the user in determining the meeting content related to the to-be-used user record through re-listening to the recorded meeting audio, thereby effectively improving the minutes determining efficiency.

**Method Embodiment 2**

In order to further determine the minutes accurately, another possible implementation of the above S3 is further provided in an embodiment of the present application, which may specifically include: determining the to-be-used semantic matching result according to the to-be-used user record, the at least one to-be-used sentence, and a pre-constructed semantic matching model. For ease of understanding, description will be made in combination with an example below.

As an example, a process of determining the to-be-used semantic matching result may specifically include S31-S33.

In S31, a to-be-used matching text is determined, according to the at least one to-be-used sentence and a preset sentence identifier.

The above "preset sentence identifier" is used to identify a start position of a sentence, which will not be limited in the embodiments of the present application. For example, the preset sentence identifier may be [CLS].

The above "to-be-used matching text" is used to record the at least one to-be-used sentence. A process of determining the "to-be-used matching text" is not limited in the embodiments of the present application. For example, it may specifically include: splicing the preset sentence identifier at the beginning of each of to-be-used sentences, to obtain the spliced sentences; and performing integration processing on the spliced sentences, to obtain the to-be-used matching text. The to-be-used matching text includes all the spliced sentences.

In S32, the to-be-used user record and the to-be-used matching text are input into the pre-constructed semantic matching model, to obtain a matching prediction result output by the pre-constructed semantic matching model.

Here, the above "matching prediction result" represents a semantic matching result between the to-be-used user record and at least one sentence in the to-be-used matching text.

The above "semantic matching model" is used to perform semantic matching processing on input data of the semantic matching model. The "semantic matching model" is a machine learning model.

In addition, a network structure of the "semantic matching model" is not limited in the embodiments of the present application. For example, the network structure may include a word encoding module, a content interaction module, and a matching prediction module.

To facilitate understanding of an operation principle of the above "semantic matching model", description will be made by taking a process of determining the "matching prediction result" as an example below.

As an example, the process of determining the "matching prediction result" described above by using the semantic matching model may specifically include S321-S323.

In S321, a user-record encoding feature and at least one sentence encoding feature are determined according to the to-be-used user record, the to-be-used matching text, and the word encoding module.

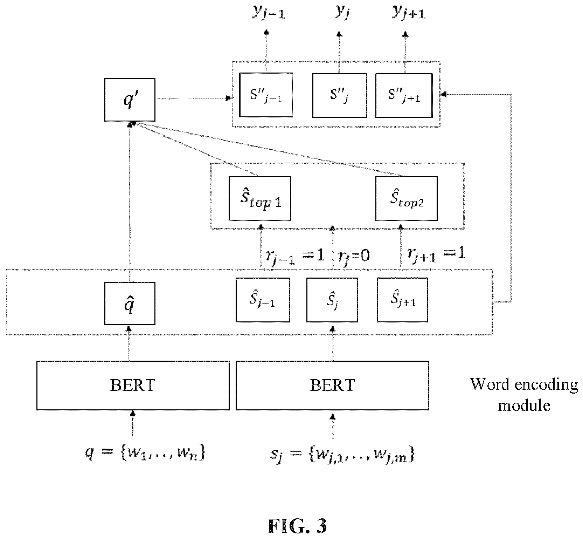

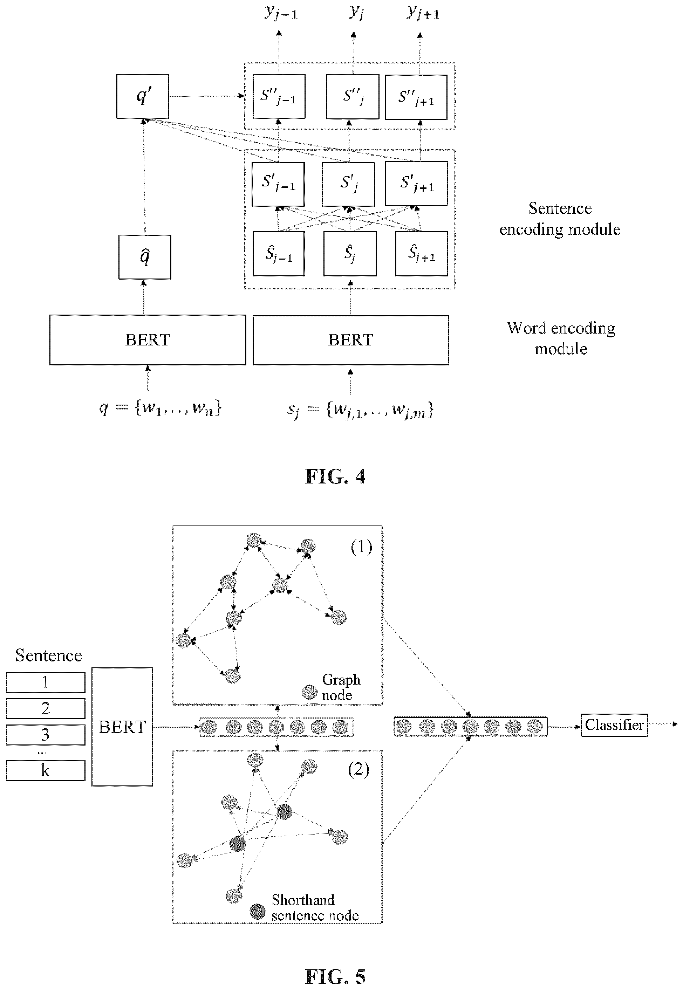

The above "word encoding module" is configured to perform encoding processing on input data of the word encoding module, which will not be limited in the embodiments of the present application. For example, as shown in FIG. 3 or FIG. 4, the "word encoding module" may be implemented by using Bidirectional Encoder Representations from Transformers (BERT) predictive training model.

The above "user-record encoding feature" represents character information carried in the to-be-used user record. The "user-record encoding feature" is obtained by using the word encoding module to perform encoding processing on the to-be-used user record.

The j-th sentence encoding feature represents character information carried in the j-th sentence in the to-be-used matching text. The "j-th sentence encoding feature" is obtained by using the word encoding module to perform encoding processing on the j-th sentence in the to-be-used matching text. Here, j is a positive integer, $j \leq J$, J is a positive integer, and J represents the number of sentences (i.e., the number of the "to-be-used sentences" above) in the to-be-used matching text.

It should be noted that the above "j-th sentence in the to-be-used matching text" includes the j-th to-be-used sentence, which will not be limited in the embodiments of the present application. For example, it may be specifically the j-th spliced sentence obtained by splicing the j-th to-be-used sentence and the preset sentence identifier.

In S322, at least one content interaction feature is obtained according to the user-record encoding feature, the at least one sentence encoding feature, and the content interaction module. The "content interaction module" is configured to perform semantic interaction processing on input data of the content interaction module.

An implementation of S322 is not limited in the embodiments of the present application. For ease of understanding, description will be made in combination with three possible implementations below.

In a first possible implementation, S322 may specifically include: inputting the user-record encoding feature and the at least one sentence encoding feature into the content interaction module, to obtain at least one content interaction feature output by the content interaction module. It should be noted that the first possible implementation of the S322 may be performed by using an operating principle of the "content interaction module" in steps 31-32 below.

In a second possible implementation, S322 may specifically include steps 11 to 12.

In step 11, at least one to-be-processed sentence feature satisfying a second similarity condition is selected from the at least one sentence encoding feature, according to similarity representation data between the user-record encoding feature and each sentence encoding feature.

Here, "similarity representation data between the user-record encoding feature and the j-th sentence encoding feature" represents a similarity between the user-record encoding feature and the j-th sentence encoding feature, so that the "similarity representation data between the user-record encoding feature and the j-th sentence encoding feature" can represent a semantic similarity between the to-be-used user record and the j-th to-be-used sentence, where j is a positive integer, j ≤J, and J is a positive integer.

In addition, a process of determining the "similarity representation data between the user-record encoding feature and the j-th sentence encoding feature" is not limited in the embodiments of the present application. For example, it may specifically include: determining a cosine distance between the user-record encoding feature and the j-th sentence encoding feature as the "similarity representation data between the user-record encoding feature and the j-th sentence encoding feature". For another example, it may specifically include: determining a Euclidean distance between the user-record encoding feature and the j-th sentence encoding feature as the "similarity representation data between the user-record encoding feature and the j-th sentence encoding feature".

The above "second similarity condition" may be set in advance. For example, it is assumed that the value of the "similarity representation data between the user-record encoding feature and the j-th sentence encoding feature" is proportionate to the similarity between the semantic information carried in the to-be-used user record and semantic information carried in the j-th to-be-used sentence. It can be seen from the above assumption that, when J sentence encoding features are ranked in a descending order of the above "similarity representation data", the "second similarity condition" may specifically be that the ranking number is smaller than a first number threshold (e.g. 2). Here, the "first number threshold" can be set in advance.

It should be noted that, for the "first number threshold", if the "first number threshold" is relatively small (e.g., 2), a semantic similarity between each to-be-processed sentence feature selected from the "sentence encoding feature" and the to-be-used user record is relatively high. Thus, the to-be-used sentence represented by the to-be-processed sentence feature can better supplement meeting information for the to-be-used user record. Further, by using these to-be-processed sentence features as the prompt information, it is possible to better guide the semantic matching model, to determine a sentence semantically similar to the to-be-used user record, in the to-be-used record text. As such, it is possible to effectively avoid determining multiple sentences having a large difference in a semantic relevance with the to-be-used user record, from the to-be-used record text. It is advantageous to determine the minutes accurately.

The above "to-be-processed sentence feature" refers to a sentence encoding feature satisfying the second similar condition.

Based on the related contents of the above step 11, after the user-record encoding feature and the at least one sentence encoding feature are acquired, multiple sentence encoding features (as shown in FIG. 3), which are most similar to the user-record encoding feature, may be selected from the sentence encoding features, which are determined as the to-be-processed sentence features. Subsequently, it is possible to determine a sentence being closest to the to-be-used user record in semantics from sentences characterized by the to-be-processed sentence features.

It is noted that, for FIG. 3, "$r_{j-1} = 1$" represents that the j-1-th sentence encoding feature is selected (i.e., the j-1-th sentence encoding feature satisfies the second similar condition). "$r_j = 0$" represents that the j-th sentence encoding feature is not selected (i.e., the j-th sentence encoding feature does not satisfy the second similar condition). $s_j = \{w_{j,1}, \cdots, w_{j,m}\}$ represents the j-th to-be-used sentence, and $w_{j,1}$ represents the first semantic unit (e.g., a word and/or a phrase) in the j-th to-be-used sentence. In a similar fashion, $w_{j,m}$ represents the m-th semantic unit in the j-th to-be-used sentence. $q = \{w_1, \cdots, w_n\}$ represents the to-be-used user record, and $w_1$ represents the first semantic unit in the to-be-used user record. In a similar fashion, $w_n$ represents the n-th semantic unit in the j-th to-be-used sentence. $\hat{s}_j$ represents the j-th sentence encoding feature, and $\hat{s}_{top1}$ represents a sentence encoding feature having a ranking number of 1. $\hat{q}$ represents a user-record encoding feature, and $q'$ represents a "user-record representation feature" below. $s_j''$ represents the j-th content interaction feature, and $y_j$ represents the j-th matching prediction score (i.e., a matching prediction score between the to-be-used user record and the j-th to-be-used sentence).

In step 12, the user-record encoding feature and the at least one to-be-processed sentence feature are input into the content interaction module, to obtain at least one content interaction feature output by the content interaction module.

It should be noted that step 12 may be implemented by using the operation principle of the "content interaction module" in step 31-step 32 below.

Based on the related contents of the second possible implementation of the above-mentioned S322, after the user-record encoding feature and the at least one sentence encoding feature are acquired, sentence encoding features which are similar to the user-record encoding feature can be selected from the sentence encoding features; and then, semantic interaction processing is performed on the selected sentence encoding features and the user-record encoding feature, to obtain the at least one content interaction feature. As such, a content interaction feature can represent a semantic interaction result between a selected sentence encoding feature and the user-record encoding feature. Subsequently, a sentence semantically closest to the to-be-used user record can be determined from the to-be-used sentences represented by the selected sentence encoding features, thereby effectively reducing the number of semantic interaction objects, improving a semantic interaction efficiency, and further improving the minutes determining efficiency.

In fact, for the above "at least one to-be-used sentence", the pronoun may be in some of the to-be-used sentences, and some of the previously existing information may be omitted. Therefore, in order to extract semantic information carried in these to-be-used sentences, another possible implementation of the above "semantic matching model" is further provided in an embodiment of the present application. In this implementation, the "semantic matching model" may further include a sentence encoding module (as shown in FIG. 4), in addition to the word encoding module, the content interaction module, and the matching prediction module.

It should be noted that, for FIG. 4, $s_j = \{w_{j,1}, \cdots, w_{j,m}\}$ represents the j-th to-be-used sentence; $q = \{w_1, \cdots, w_n\}$ represents the to-be-used user record; $\hat{s}_j$ represents the j-th sentence encoding feature; $\hat{q}$ represents the user-record encoding feature; $q'$ represents the "user-record representation feature" below; $s_j'$ represents the j-th representation feature; $s_j''$ represents the j-th content interaction feature; and $y_j$ represents the j-th matching prediction score (e.g., a match prediction score between the to-be-used user record and the j-th to-be-used sentence).

In order to facilitate understanding of an operating principle of the above "sentence encoding module", description will be made in combination with a third possible implementation of S322 below.

In the third possible implementation, when the above "semantic matching model" further includes the sentence encoding module, the S322 may specifically include steps 21 to 22.

In step 21, the at least one sentence encoding feature is input into the sentence encoding module, to obtain at least one sentence representation feature output by the sentence encoding module.

The above "sentence encoding module" is configured to perform encoding processing on a sentence with reference to context information of the sentence, and an implementation thereof is not limited in the embodiments of the present application. For example, it may be implemented by using any encoder. It should be noted that the above "encoder" is not limited in the embodiments of the present application, which may include, for example, an Encoder layer in a two-layer Transformer.

The j-th sentence representation feature represents semantic information carried in the j-th to-be-used sentence, where j is a positive integer, j ≤J, and J is a positive integer.

In step 22, at least one content interaction feature is obtained according to the user-record encoding feature, the at least one sentence representation feature, and the content interaction module.

An implementation of step 22 is not limited in the embodiments of the present application. For example, in a first possible implementation, as shown in FIG. 4, step 22 may specifically include: inputting the user-record encoding feature and the at least one sentence representation feature into the content interaction module, to obtain at least one content interaction feature output by the content interaction module. It should be noted that the first possible implementation of step 22 may be implemented using the operating principle of the above "content interaction module" shown in step 31-step 32 below.

In addition, in order to improve the semantic interaction efficiency, a second possible implementation of step 22 is further provided in an embodiment of the present application, which may specifically include steps 221- 222.

In step 221, according to similarity representation data between the user-record encoding feature and each sentence representation feature, at least one to-be-referenced sentence feature satisfying a first similarity condition is selected from the at least one sentence representation feature.

Here, the "similarity representation data between the user-record encoding feature and the j-th sentence representation feature" indicates a similarity between the user-record encoding feature and the j-th sentence representation feature. The "similarity representation data between the user-record encoding feature and the j-th sentence representation feature" can represent a semantic similarity between the to-be-used user record and the j-th to-be-used sentence, where j is a positive integer, j ≤J, and J is a positive integer.

In addition, the process of determining the "similarity representation data between the user-record encoding feature and the j-th sentence representation feature" is not limited in the embodiments of the present application. For example, it may specifically include: determining a cosine distance between the user-record encoding feature and the j-th sentence representation feature as the "similarity representation data between the user-record encoding feature and the j-th sentence representation feature". For another example, it may specifically include: determining a Euclidean distance between the user-record encoding feature and the j-th sentence representation feature as the "similarity representation data between the user-record encoding feature and the j-th sentence representation feature".

The above "first similarity condition" may be set in advance. For example, it is assumed that the value of the "similarity representation data between the user-record encoding feature and the j-th sentence representation feature" is proportionate to the similarity between the semantic information carried in the to-be-used user record and the semantic information carried in the j-th to-be-used sentence. It can be seen from the above assumption that when J sentence representation features are ranked in a descending order of the above "similarity representation data", the "first similarity condition" can be specifically that a ranking number is less than a second number threshold.

It should be noted that, for the "second number threshold", if the "second number threshold" is relatively small (e.g., 2), a semantic similarity between each to-be-referenced sentence feature selected from the above "at least one sentence representation feature" and the to-be-used user record is relatively high. Thus, the to-be-used sentence represented by each to-be-referenced sentence feature can better supplement meeting information for the to-be-used user record. In addition, by using these to-be-referenced sentence features as prompt information, the semantic matching model can be better guided, to determine a sentence semantically similar to the to-be-used user record in the to-be-used record text. As such, it is possible to effectively avoid determining multiple sentences having a large difference in a semantic relevance with the to-be-used user record, from the to-be-used record text. It is advantageous to determine the minutes accurately.

The above "to-be-referenced sentence feature" refers to a sentence representation feature satisfying the first similar condition.

Based on the related contents of the above-mentioned step 221, the user-record encoding feature and the at least one sentence representation feature are obtained, multiple sentence representation features most similar to the user-record encoding feature can be selected from the sentence representation features, and each of the multiple representation features is determined as the to-be-processed sentence feature. Subsequently, a sentence semantically closest to the to-be-used user record can be determined from the to-be-used sentences characterized by the to-be-processed sentence features.

In step 222, a user-record encoding feature and the at least one to-be-referenced sentence feature are input into the content interaction module, to obtain at least one content interaction feature output by the content interaction module.

It should be noted that step 222 may be implemented using the operation principle of the "content interaction module" described in step 31-step 32 below.

Based on the related contents of the above steps 221 to 222, after the user-record encoding feature and the at least one sentence representation feature are obtained, sentence representation features that are similar to the user-record encoding feature can be selected from the sentence representation features; and then, semantic interaction processing is performed on the selected sentence representation features and the user-record encoding feature, to obtain the at least one content interaction feature. As such, the content interaction feature can represent a semantic interaction result between the selected sentence representation features and the user-record encoding feature. Subsequently, a sentence semantically closest to the to-be-used user record can be determined from to-be-used sentences represented by the selected sentence representation features, thereby effectively reducing the number of semantic interaction objects, improving the semantic interaction efficiency, and further improving the minutes determining efficiency.

Based on the related contents of the third possible implementation of the above-mentioned S322, after the user-record encoding feature and the at least one sentence encoding feature are acquired, sentence encoding processing can be performed on each sentence encoding feature with reference to context information of each to-be-used sentence, to obtain sentence representation features; and then, semantic interaction processing is performed on the user-record encoding feature and all or part of the sentence representation features, to obtain at least one content interaction feature. Subsequently, the sentence semantically closest to the to-be-used user record can be better determined based on the content interaction feature, thereby determining the minutes accurately.

In addition, an implementation of the above "content interaction module" is not limited in the embodiments of the present application, which may specifically include, for example, an attention layer and a fusion layer.

In order to facilitate understanding of the operation principle of the above "content interaction module", description will be made by taking the process of determining the "at least one content interaction feature" as an example.

As an example, when input data of the above "content interaction module" includes the user-record encoding feature and at least one to-be-interacted sentence feature, the process of determining the "at least one content interaction feature" by the above "content interaction module" includes steps 31-32.

In step 31, the user-record encoding feature and the at least one to-be-interacted sentence feature are input into the attention layer, to obtain the user-record representation feature output by the attention layer.

The above "at least one to-be-interacted sentence feature" represents a sentence feature to be referred when the semantic interaction processing is performed on the user-record encoding feature, which will not be limited in the embodiments of the present application. For example, when a "content interaction module" in the operating principle shown in steps 31-32 is used to implement the "first possible implementation of step S322", the "at least one to-be-interacted sentence feature" may include the above "at least one sentence encoding feature". As another example, when a "content interaction module" in the operating principle shown in steps 31-32 is used to implement the above step 12, the "at least one to-be-interacted sentence feature" may include the "at least one to-be-processed sentence feature". As yet another example, when a "content interaction module" in the operating principle shown in steps 31-32 is used to implement the "first possible implementation of step 22", the "at least one to-be-interacted sentence feature" may include the "at least one sentence representation feature". As still another example, when a "content interaction module" in the operating principle shown in steps 31-32 is used to implement the above step 222, the "at least one to-be-interacted sentence feature" may include the "at least one to-be-referenced sentence feature".

The above "attention layer" is used for performing attention processing on input data of the attention layer. An implementation of the above "attention layer" is not limited in the embodiments of the present application. For example, it may be implemented using a multi-head attention mechanism.

The above "user-record representation feature" represents semantic information carried in the to-be-used user record.

In addition, the process of determining the above "user-record representation feature" is not limited in the embodiments of the present application. For example, when the above "attention layer" is implemented using the multi-head attention mechanism, the process of determining the above "user-record representation feature" may specifically include: using the user-record encoding feature as a query parameter (i.e., a parameter Q) of the multi-head attention mechanism, and using the above "at least one to-be-interacted sentence feature" as the other two parameters (i.e., a parameter K and a parameter V) of the multi-head attention mechanism. Thus, meeting content information carried in the "at least one to-be-interacted sentence feature" is integrated into the user-record encoding feature. As such, the meeting content information can better supplement information omitted in the to-be-used user record in a case of incomplete information, such as a short to-be-used user record, or having unclear description, while the "user-record representation feature" is given a global perspective of the whole meeting content. Thus, it is advantageous to better determine a sentence corresponding to the to-be-used user record in the above "to-be-used record text".

In step 32, at least one content interaction feature is determined based on the user-record representation feature, the at least one to-be-interacted sentence feature, and the fusion layer.

Here, the "e-th content interaction feature" refers to a semantic interaction result between the user-record representation feature and the e-th to-be-interacted sentence feature, where e is a positive integer, e≤E, E is a positive integer, and E represents the number of content interaction features (i.e., the number of to-be-interacted sentence feature).

In addition, the process of determining the "e-th content interaction feature" is not limited in the embodiments of the present application. For example, the process of determining the "e-th content interaction feature" may specifically include: inputting the user-record representation feature and the e-th to-be-interacted sentence feature into the fusion layer, to obtain the e-th content interaction feature output by the fusion layer.

The "fusion layer" is configured to perform feature fusion processing on input data of the fusion layer. Moreover, an operation principle of the "fusion layer" is not limited in the embodiments of the present application. For example, specifically, after the user-record representation feature and the e-th to-be-interacted sentence feature are input to the fusion layer, the fusion layer directly splices the user-record representation feature and the e-th to-be-interacted sentence feature, to obtain the e-th content interaction feature.

In order to improve the semantic interaction effect, another operation principle of the above "fusion layer" is further provided in an embodiment of the present application. For ease of understanding, description will be made by taking the process of determining the "e-th content interaction feature" as an example.

As an example, the process of determining the "e-th content interaction feature" may specifically include steps 321-323.

In step 321, the e-th similarity representation feature is determined according to the user-record representation feature and the e-th to-be-interacted sentence feature. The e-th similarity representation feature represents an information similarity between the user-record representation feature and the e-th to-be-interacted sentence feature.

The above "e-th similarity representation feature" is used to describe a semantic information similarity between the user-record representation feature and the e-th to-be-interacted sentence feature.

In addition, a process of determining the above "e-th similarity representation feature" is not limited in the embodiments of the present application. For example, it may be implemented by using any existing or future feature similarity determination method. As another example, the process of determining the above "e-th similarity representation feature" may specifically include: determining the e-th similarity representation feature based on a dot product of the user-record representation feature and the e-th to-be-interacted sentence feature, for example, determining the dot product of the user-record representation feature and the e-th to-be-interacted sentence feature as the e-th similarity representation feature.

In step 322, an e-th information-difference representation feature is determined according to the user-record representation feature and the e-th to-be-interacted sentence feature. The e-th information-difference representation feature represents an information differentiation between the user-record representation feature and the e-th to-be-interacted sentence feature.

The above "e-th information-difference representation feature" is used to describe a semantic differentiation difference between the user-record representation feature and the e-th to-be-interacted sentence feature, such that the "e-th information-difference representation feature" can represent the information differentiation between the to-be-used user record and a to-be-used sentence represented by the e-th to-be-interacted sentence feature.

In addition, a process of determining the above "e-th information-difference representation feature" is not limited in the embodiments of the present application. For example, it can be implemented by using any of the existing or future feature differentiation determination methods. As another example, the process of determining the "e-th information-difference representation feature" may specifically include: determining the e-th information-difference representation feature based on a difference between the user-record representation feature and the e-th to-be-interacted sentence feature, for example, determining the difference between the user-record representation feature and the e-th to-be-interacted sentence feature as the e-th information-difference representation feature.

In step 323, the user-record representation feature, the e-th to-be-interacted sentence feature, the e-th similarity representation feature, and the e-th information-difference representation feature are spliced, to obtain the e-th content interaction feature, as shown in Equation (1).

$$s_e'' = [q', \widetilde{s_e}, q' * \widetilde{s_e}, q' - \widetilde{s_e}] \qquad (1)$$

where $s_e''$ represents the e-th content interaction feature; $q'$ represents the user-record representation feature; $\widetilde{s_e}$ represents the e-th to-be-interacted sentence feature; * represents dot product processing; $q' * \widetilde{s_e}$ represents the e-th similarity representation feature; and $q' - \widetilde{s_e}$ represents the e-th information-difference representation feature.

It can be seen from the related contents of the above steps 321 to 323 that, after obtaining the user-record representation feature and the e-th to-be-interacted sentence feature, the "fusion layer" can determine the e-th content interaction feature by referring to the user-record representation feature, the e-th to-be-interacted sentence feature, the similarity feature between the user-record representation feature and the e-th to-be-interacted sentence feature, and the difference feature between the user-record representation feature and the e-th to-be-interacted sentence feature. The e-th content interaction feature can more fully describe the semantic similarity between the to-be-used user record and the to-be-used sentence characterized by the e-th to-be-interacted sentence feature.

As can be seen from the related contents in the above steps 31 to 32, the above "content interaction module" can be used to perform attention processing and then perform feature fusion processing on the input data of the content interaction module, to implement semantic interaction processing on the input data of the content interaction module.

It should be noted that when the above "first possible implementation of S322" is implemented using steps 31-32, the "to-be-interacted sentence feature" in the steps 31-32 can be replaced with "sentence encoding feature" directly. When the above step 12 is implemented by using the steps 31-32, the "to-be-interacted sentence feature" in the steps 31-32 can be replaced with "to-be-processed sentence feature" directly. When the above "first possible implementation of step 22" is implemented using steps 31-32, the "to-be-interacted sentence feature" in the steps 31-32 can be replaced with "sentence representation feature" directly. When the above step 222 is implemented by using the steps 31-32, the "to-be-interacted sentence feature" in the steps 31-32 can be replaced with "to-be-referenced sentence feature" directly.

Based on the related contents of the above-mentioned S322, it can be seen that, for the semantic matching model, after the user-record encoding feature and the at least one sentence encoding feature are determined by the encoding module of the semantic matching model, the content interaction module of the semantic matching model can perform semantic interaction processing with reference to the user-record encoding feature and the sentence encoding features, to obtain the at least one content interaction feature. As such, the content interaction feature can better represent the semantic similarity between the to-be-used user record and all or part of the to-be-used sentences.

In S323, the at least one content interaction feature is input into the matching prediction module, to obtain a matching prediction result output by the matching prediction module.

The above "matching prediction module" is configured to determine a matching degree (i.e., similarity) between the semantic information carried in a to-be-used sentence and the semantic information carried in the to-be-used user record. Moreover, an implementation of the "matching prediction module" is not limited in the embodiments of the present application.

The above "matching prediction result" represents a semantic matching result between the "at least one to-be-used sentence" and the to-be-used user record, which will not be limited in the embodiments of the present application. For example, if the e-th content interaction feature is determined according to the user-record representation feature and the e-th to-be-interacted sentence feature, the "matching prediction result" may include a matching prediction score between the to-be-used user record and the to-be-used sentence characterized by the e-th to-be-interacted sentence feature. The "matching prediction score between the to-be-used user record and the to-be-used sentence corresponding to the e-th to-be-interacted sentence feature" represents a semantic similarity between the to-be-used user record and the to-be-used sentence characterized by the e-th to-be-interacted sentence feature, where e is a positive integer, e≤E, and E is a positive integer.

Based on the related contents of the above S321 to S323, it can be seen that, for a pre-constructed semantic matching model, a semantic matching process between the to-be-used user record and at least one sentence in the to-be-used matching text can be implemented by a word encoding module, a content interaction module, and a matching prediction module of the semantic matching model. Since the above "semantic matching model" has a better semantic matching effect, the matching prediction result determined by the "semantic matching model" can better represent the semantic similarity between the "at least one to-be-used sentence" and the to-be-used user record.

In addition, the above "semantic matching model" may be constructed based on the pre-collected labeled semantic matching corpus of records. A processing of constructing the above "semantic matching model" is not limited in the embodiments of the present application. For example, it may be implemented using any of the existing or future model construction methods.

The "labeled semantic matching corpus of records" may include sample user records, a first meeting-text sentence set corresponding to the sample user records, and semantic matching labels corresponding to the sample user records. Here, a "sample user record" refers to shorthand information recorded by a relevant person for a sample meeting record. The "first meeting-text sentence set corresponding to the sample user records" is obtained by performing sentence segmentation on a meeting transcription text of a sample meeting. Each of "semantic matching labels corresponding to the sample user records" indicates that semantic information of the sample user record is actually identical with semantic information of which sentences in the first meeting-text sentence set. The "semantic matching labels corresponding to the sample user records" can be generated by manual labeling.

Further, in order to improve anti-noise performance of the "semantic matching model", noise addition for data can be performed on the "labeled semantic matching corpus of records", to construct some weak supervision data. As such, it is possible to construct the "semantic matching model" by using the weak supervision data and the "labeled semantic matching corpus of records" subsequently.

A process of constructing the "weak supervision data" may include: for each original sentence in the "meeting transcription text of the sample meeting", generating sentence noise addition data of this original sentence by operations such as synonym replacement, word-segment deletion, random word-segment insertion, and word-segment out-of-order; and then constructing a sentence pair of this original sentence and corresponding sentence noise addition data which are relevant. Subsequently, the "semantic matching model" can be constructed based on these sentence pairs. Moreover, a process of constructing the "semantic matching model" includes: training the semantic matching model in a first stage by using the sentence pairs, so that the trained semantic matching model can accurately learn that semantic information carried in the sentence noise addition data in the sentence pair is identical with semantic information carried in an original sentence in this sentence pair; and then, training the semantic matching model in a second stage by using the "labeled semantic matching corpus of records", so that a semantic prediction result output by the semantic matching model for a sample user record and the first meeting-text sentence set is almost close to the "semantic matching label corresponding to the sample user record". In this way, the semantic matching performance of the semantic matching model can be improved.

On the basis of the related contents of the above-mentioned S32, after the to-be-used user record and the to-be-used matching text are acquired, a pre-constructed semantic matching model may be used to perform semantic matching processing on the to-be-used user record and at least one sentence in the to-be-used matching text, to obtain a matching prediction result. The "matching prediction result" can represent a semantic similarity between the "at least one to-be-used sentence" and the to-be-used user record. Subsequently, a sentence semantically similar to the to-be-used user record can be determined from the to-be-used record text based on the "matching prediction result".

In S33, a to-be-used semantic matching result is determined according to the matching prediction result.

An implementation of S33 is not limited in the embodiments of the present application. For example, it may specifically include: determining the matching prediction result as the to-be-used semantic matching result.

In addition, in order to further improve the semantic matching accuracy, another possible implementation of S33 is further provided in an embodiment of the present application, which may specifically include: determining the to-be-used semantic matching result based on a to-be-used text search result and the matching prediction result.

The above "to-be-used text search result" refers to a result obtained by searching for the to-be-used user record from the "to-be-used record text", which will not be limited in the embodiments of the present application. It may include, for example, a search score between the to-be-used user record and the j-th to-be-used sentence. The "search score between the to-be-used user record and the j-th to-be-used sentence" can represent the semantic similarity between the to-be-used user record and the j-th to-be-used sentence, where j is a positive integer, $j \leq J$, and J is a positive integer.

In addition, the "to-be-used text search result" may be determined according to a preset search algorithm, the to-be-used user record, and the at least one to-be-used sentence. The "preset search algorithm" may be set in advance. For example, it may be a Best Match (BM) 25. It should be noted that "25" refers to the 25-th algorithm iteration.

In order to facilitate understanding of the above "another possible implementation of S33", description will be made in combination with an example below.

As an example, the above "matching prediction result" includes a matching prediction score between the to-be-used user record and the j-th to-be-used sentence, and the above "to-be-used text search result" includes a search score (e.g., BM25 search score) between the to-be-used user record and the j-th to-be-used sentence. In this case, S33 may specifically include: calculating a weighted sum of the "matching prediction score between the to-be-used user record and the j-th to-be-used sentence" and the "search score between the to-be-used user record and the j-th to-be-used sentence", to obtain the semantic matching score between the to-be-used user record and the j-th to-be-used sentence, where j is a positive integer, j ≤J, and J is a positive integer.

It should be noted that a weight corresponding to the "matching prediction score between the to-be-used user record and the j-th to-be-used sentence" and a weight corresponding to the "search score between the to-be-used user record and the j-th to-be-used sentence" may be set in advance.

Based on the related contents of the above S31 to S33, after the to-be-used user record and the at least one to-be-used sentence are acquired, the semantic matching process between the to-be-used user record and the at least one to-be-used sentence can be implemented by using the pre-constructed semantic matching model, to obtain the to-be-used semantic matching result. Since the "semantic matching model" has a good semantic matching effect, the to-be-used semantic matching result determined by the "semantic matching model" can better represent the semantic matching degree between the to-be-used user record and at least on sentence in the to-be-used record text, thus being advantageous to determining the minutes accurately.

**Method Embodiment 3**

The inventors have also found that locations of multiple sentences corresponding to one piece of user record information in the to-be-used record text generally have a relatively concentrated distribution. Therefore, based on such a location distribution constraint, another possible implementation of the minutes determining method is further provided in an embodiment of the present application. In this implementation, when the above "at least one to-be-used sentence" includes at least one semantic matching sentence and the above "to-be-used semantic matching result" includes the semantic matching score between the to-be-used user record and each semantic matching sentence, the minutes determining method includes S5-S7, in addition to the above S1-S4, where the S5-S7 are performed between S3 and S4.

In S5, according to the semantic matching score between the to-be-used user record and each semantic matching sentence, at least one reference sentence satisfying a preset reference condition is selected from at least one semantic matching sentence.

The above "semantic matching sentence" refers to a to-be-used sentence having a semantic matching score (i.e., a to-be-used sentence characterized by the above "content interaction feature"), which will not be limited in the embodiments of the present application. For ease of understanding, description will be made in combination with three examples below.

In an example 1, if there is no selecting processing (e.g., a selecting process based on the above "first similarity condition" or "second similarity condition") in the process of determining the "to-be-used semantic matching result", the "semantic matching sentence" refers to the above "to-be-used sentence". The above "at least one semantic matching sentence" may include the above "at least one to-be-used sentence".

In an example 2, if there is a selecting process based on the first similarity condition in the process of determining the "to-be-used semantic matching result", the "semantic matching sentence" refers to the a to-be-used sentence characterized by a to-be-referenced sentence feature. The above "at least one semantic matching sentence" may include at least one to-be-used sentence characterized by the to-be-referenced sentence feature.

In an example 3, if there is a selecting process based on a second similarity condition in the process of determining the "to-be-used semantic matching result", the "semantic matching sentence" refers to the a to-be-used sentence characterized by a to-be-processed sentence feature. The above "at least one semantic matching sentence" can include at least one to-be-used sentence characterized by the to-be-processed sentence feature.

The above "preset reference condition" may be set in advance. For example, the "preset reference condition" may specifically be that the semantic matching score between the to-be-used user record and the reference sentence is higher than a preset first score threshold. For another example, when all the semantic matching sentences are ranked in a descending order of the semantic matching scores, the "preset reference condition" may specifically be that a ranking number is lower than a preset third number threshold (for example, 2).

The above "reference sentence" refers to a semantic matching sentence that satisfies the preset reference condition.

Based on the related contents of the above-mentioned S5, after semantic matching scores between the to-be-used user record and respective semantic matching sentences are acquired, multiple semantic matching sentences (e.g., Top 2) with relatively high semantic matching scores may be selected from all the semantic matching sentences based on the semantic matching scores. As such, text position penalty terms of respective semantic matching sentences can be subsequently determined by using text positions of the multiple semantic matching sentences with relatively high semantic matching scores as references.

In S6, a distance penalty score of each semantic matching sentence is determined according to a text position of the at least one reference sentence and a text position of each semantic matching sentence.

Here, the "distance penalty score of the e-th semantic matching sentence" represents influence of a text position of the e-th semantic matching sentence on the "semantic matching degree between the to-be-used user record and the e-th semantic matching sentence", where e is a positive integer and e≤E.

Further, a process of determining the above "distance penalty score of the e-th semantic matching sentence" is not limited in the embodiments of the present application, which may specifically include, for example, S61-S63.

In S61, a distance set corresponding to the e-th semantic matching sentence is determined based on distances between text positions of reference sentences and the text position of the e-th semantic matching sentence.

For example, when the number of the "reference sentences" is Y, S61 may specifically include: grouping a distance between a text position of the first reference sentence and the text position of the e-th semantic matching sentence, a distance between a text position of the second reference sentence and the text position of the e-th semantic matching sentence,..., and a distance between a text position of the Y-th reference sentence and the text position of the e-th semantic matching sentence, to obtain the distance set corresponding to the e-th semantic matching sentence.

It should be noted that the above "text position" refers to a position of a sentence in the to-be-used record text. For example, the above "text position of the e-th semantic matching sentence" refers to a position of the e-th semantic matching sentence in the to-be-used record text.

In S62, preset statistical analysis processing is performed on the distance set corresponding to the e-th semantic matching sentence, to obtain a to-be-used distance corresponding to the e-th semantic matching sentence.

The above "preset statistical analysis processing" may be set in advance, which will not be limited in the embodiments of the present application. For example, it may be: taking a minimum, taking a maximum, averaging, summing, and so on.

The above "to-be-used distance corresponding to the e-th semantic matching sentence" represents a text-position distance between the e-th semantic matching sentence and the above "at least one reference sentence".

In S63, the distance penalty score of the e-th semantic matching sentence is determined based on the to-be-used distance corresponding to the e-th semantic matching sentence.

It should be noted that an implementation of S63 is not limited in the embodiments of the present application. For example, S63 may specifically include: determining a product of a preset penalty coefficient and the to-be-used distance corresponding to the e-th semantic matching sentence as the distance penalty score of the e-th semantic matching sentence. The "preset penalty coefficient" may be set in advance.

Based on the related contents of the above-mentioned S6, after the at least one reference sentence is acquired, a distance penalty score of each semantic matching sentence can be determined according to distances between a text position of each semantic matching sentence and respective text positions of these reference sentences.

In S7, the semantic matching score between the to-be-used user record and each semantic matching sentence is updated by using the distance penalty score of each semantic matching sentence, as shown in Equation (2).

$$Score'_e = Score_e - DP_e \qquad (2)$$

where $Score'_e$ represents the updated semantic matching score between the to-be-used user record and the e-th semantic matching sentence, $Score_e$ represents the semantic matching score between the to-be-used user record and the e-th semantic matching sentence before updating, and $DP_e$ represents the distance penalty score of the e-th semantic matching sentence.

Based on the related contents of the above S5 to S7, after the to-be-used semantic matching result is acquired, the to-be-used semantic matching result may be updated by using the text position of each to-be-used sentence involved in the to-be-used semantic matching result. The updated to-be-used semantic matching result satisfies the position distribution constraint in which description sentences of the user record are relatively centralized in practice. Thus, the updated to-be-used semantic matching result can accurately represent the semantic matching degree between the to-be-used user record and at least one sentence in the to-be-used record text. As such, the to-be-used minutes content can be subsequently determined based on the updated to-be-used semantic matching result, thereby facilitating to determine the minutes accurately.

**Method Embodiment 4**

In order to determine the minutes more accurately, another possible implementation of the above S4 is further provided in an embodiment of the present application, which will be described below in combination with an example.

As an example, when the above "at least one to-be-used sentence" includes at least one semantic matching sentence, and the above "to-be-used semantic matching result" includes the semantic matching score between the to-be-used user record and each semantic matching sentence, S4 may specifically include: S41-S42.

In S41, at least one target sentence satisfying a first matching condition is selected from the at least one semantic matching sentence, according to the semantic matching score between the to-be-used user record and each semantic matching sentence.

The above "first matching condition" may be set in advance. For example, it may be implemented using a condition reached by "at least one target sentence" as shown in any implementation of S41 below, such as, a condition as shown by Equation (6).

The above "target sentence" refers to a semantic matching sentence satisfying the first matching condition.

An implementation of S41 is not limited in the embodiments of the present application. For example, S41 may be implemented in any implementation of a process of determining the "at least one target sentence" shown in steps 41-42 below, provided that a "candidate sentence" in any implementation of the process of determining the "at least one target sentence" in the following steps 41-42 is replaced with "semantic matching sentence".

In addition, another possible implementation of S41 is further provided in an embodiment of the present application, which may specifically include S411-S412.

In S411, at least one primary sentence satisfying a second matching condition is selected from the at least one semantic matching sentence, according to the semantic matching score between the to-be-used user record and each semantic matching sentence.

The above "second matching condition" may be set in advance. For example, it may specifically be: a semantic matching score between the to-be-used user record and the primary sentence being higher than a preset second score threshold. For another example, when all the semantic matching sentences are ranked in a descending order of the semantic matching scores, the "second matching condition" may specifically be: a ranking number being lower than a preset fourth number threshold.

The above "primary sentence" refers to a semantic matching sentence satisfying the second matching condition.

It can be seen based on the related contents of the S411 that, after the semantic matching score between the to-be-used user record and each semantic matching sentence is acquired, multiple semantic matching sentences (e.g., Top K) with relatively high semantic matching scores can be selected from all the semantic matching sentences based on the semantic matching scores, and the selected semantic matching sentences are determined as the primary sentences. As such, semantic information carried in the primary sentences is close to the semantic information carried in the to-be-used user record, such that a sentence representing the semantic information carried in the to-be-used user record can be determined from the primary sentences subsequently.

In S412, at least one target sentence satisfying a third matching condition is selected from at least one primary sentence, according to the semantic matching score between the to-be-used user record and each primary sentence.

The above "third matching condition" may be set in advance. For example, it may be a condition reached by the "at least one target sentence" as shown in S41-S42 below, such as, a condition as shown by Equation (6).

An implementation of S412 is not limited in the embodiments of the present application. For example, it may be implemented in any implementation of the process of determining the "at least one target sentence" shown in steps 41- 42 below, provided that a "candidate sentence" in any implementation of the process of determining the "at least one target sentence" in the following steps 41-42 is replaced with "primary sentence".

It can be seen from the related contents of the above S411 to S412 that, after the to-be-used semantic matching result is acquired, primary sentences satisfying the second matching condition can be determined by means of the semantic matching score recorded by the to-be-used semantic matching result; and then the primary sentence satisfying the third matching condition is determined as a target sentence. As such, the target sentence can satisfy both the second matching condition and the third matching condition, thereby enabling the target sentences to better represent the semantic information carried in the to-be-used user record.

In addition, yet another possible implementation of S41 is further provided in an embodiment of the present application, in which S41 includes not only the above S411, but also S413-S414.

In S413, at least one reselected sentence satisfying a fourth matching condition is selected from the at least one primary sentence, according to the number of non-stop words in each primary sentence.

The above "the number of non-stop words" refers to the number of words except the stop words in a sentence.

The above "fourth matching condition" may be set in advance. For example, it may specifically be: the number of non-stop words exceeding a preset number threshold (for example, 1).

The above "reselection sentence" refers to a primary sentence that satisfies the fourth matching condition, that is, a semantic matching sentence that satisfies both the second matching condition and the fourth matching condition.

It can be seen based on the related contents of S413 that, after the at least one primary sentence is acquired, the number of non-stop words in each primary sentence can be counted; and then the primary sentence with the large number of non-stop words is determined as a reselected sentence. In this way, sentences with a low amount of information can be filtered out, and thus bad effects of these sentences with the low amount of information on the minutes determining process can be effectively avoided.

In S414, at least one target sentence satisfying a third matching condition is selected from the at least one reselected sentence, according to a semantic matching score between the to-be-used user record and each reselected sentence.

It should be noted that an implementation of S414 is not limited in the embodiments of the present application. For example, it may be implemented in any implementation of the process of determining the "at least one target sentence" shown in steps 41-42 below, provided that a "candidate sentence" in any implementation of the process of determining the "at least one target sentence" in the following step 41-42 is replaced with a "reselected sentence".

On the basis of the related contents of the above-mentioned S413 to S414, after the to-be-used semantic matching result is acquired, primary sentences satisfying the second matching condition may be determined by means of the semantic matching score recorded by the to-be-used semantic matching result; then the sentences with a low amount of information are filtered out from the primary sentences, to obtain the at least one reselected sentence; and finally, a reselected sentence satisfying the third matching condition is determined as a target sentence. As such, the target sentence can satisfy the second matching condition, the third matching condition, and the fourth matching condition, thereby enabling the target sentence to better represent the semantic information carried in the to-be-used user record.

In addition, in order to better determine the above "at least one target sentence", a possible implementation of determining the above "at least one target sentence" is further provided in an embodiment of the present application. For ease of understanding, description will be made in combination with an example below.

By way of example, when the above "at least one target sentence" is selected from at least one candidate sentence, the process of determining the "at least one target sentence" may specifically include step 41-step 42.

In step 41, a to-be-deleted sentence satisfying a first deletion condition is selected from the at least one candidate sentence according to a semantic matching score between the to-be-used user record and each candidate sentence, to obtain a first selecting result.

The above "at least one candidate sentence" includes the above "at least one target sentence", which will not be limited in the embodiments of the present application. For example, when the above S41 is implemented by using steps 41-42, the above "at least one candidate sentence" refers to the above "at least one semantic matching sentence". As another example, when the above S412 is implemented by using steps 41-42, the above "at least one candidate sentence" refers to the above "at least one primary sentence". As yet another example, when the above S414 is implemented by using steps 41-42, the above "at least one candidate sentence" refers to the above "at least one reselected sentence".

The above "first deletion condition" may be set in advance. For example, it may specifically be: a semantic matching score between the to-be-used user record and the to-be-deleted sentence being lower than a preset third score threshold (for example, 0.6).

The "to-be-deleted sentence" refers to a candidate sentence satisfying the first deletion condition.

The "first selecting result" is used to indicate whether there is a sentence to be deleted in the "at least one candidate sentence".

Based on the related contents of the above-mentioned step 41, after at least one candidate sentence is acquired, a candidate sentence with a relatively low semantic matching score can be selected from the candidate sentences, and is determined as a to-be-deleted sentence. Subsequently, sentence required to be deleted can be determined from the to-be-deleted sentences.

In step 42, at least one target sentence is determined based on the first selecting result and the at least one candidate sentence.

As an example, step 42 may specifically include step 421-step 424.

In step 421, it is determined whether there is a to-be-deleted sentence in the "at least one candidate sentence" according to the first selecting result; if there is a to-be-deleted sentence in the "at least one candidate sentence", step 423-step 424 are performed; otherwise, step 422 is performed.

In an embodiment of the present application, after the first selecting result is acquired, if the first selecting result indicates that there is no to-be-deleted sentence in the "at least one candidate sentence", it can be determined that all the candidate sentences have relatively high semantic matching scores. Thus, it can be determined that the semantic information carried in all candidate sentences is very close to the semantic information carried in the to-be-used user record. If the first selecting result indicates that there is at least one to-be-deleted sentence in the "at least one candidate sentence", it is determined that there are some candidate sentences with relatively low semantic matching scores in the "at least one candidate sentence". Thus, it is determined that the semantic information carried in these candidate sentences with relatively low semantic matching scores may be more different from the semantic information carried in the to-be-used user record.

In step 422, each candidate sentence is determined as a target sentence.

In an embodiment of the present application, if the first selecting result indicates that there is no to-be-deleted sentence in the above "at least one candidate sentence", it can be determined that the semantic information carried in candidate sentences is very close to the semantic information carried in the to-be-used user record. Thus, all candidate sentences can be directly determined as the target sentences, so that these target sentences can represent the sentences corresponding to the to-be-used user record in the to-be-used record text.

In step 423, at least one to-be-retained sentence is determined based on the at least one to-be-deleted sentence and the at least one candidate sentence.

The above "to-be-retained sentence" refers to a sentence that needs to be retained, i.e., a sentence that does not need to be deleted.

An implementation of step 423 is not limited in the embodiments of the present application. For example, it may specifically include: if the first selecting result indicates that there is at least one to-be-deleted sentence in the above "at least one candidate sentence", the at least one to-be-deleted sentence can be deleted from the "at least one candidate sentence", to obtain at least one to-be-retained sentence.

In some cases, since there are defects in the to-be-used user record (for example, too brief or overgeneralized), all candidate sentences obtained by selecting based on the to-be-used user record have relatively low semantic matching scores. Therefore, in order to improve a positioning accuracy of user-record information, another possible implementation of step 423 is further provided in an embodiment of the present application, which may specifically include steps 4231-4235.

In step 4231, if the at least one candidate sentence satisfies a preset correction condition, at least one to-be-evaluated sentence satisfying a first retention condition is selected from the at least one to-be-deleted sentence.

The above "preset correction condition" may be set in advance. For example, the "preset correction condition" may be specifically: a semantic matching score between the to-be-used user record and each candidate sentence being not higher than the preset fourth score threshold, that is, the semantic matching score between the to-be-used user record and each candidate sentence is relatively low.

The above "first retention condition" may be set in advance. For example, the "first retention condition" may be specifically: a semantic matching score between the to-be-used user record and the to-be-evaluated sentence being higher than a preset fifth score threshold (e.g., 0.3). The fifth score threshold is lower than the above "third score threshold".

The above "to-be-evaluated sentence" refers to a to-be-deleted sentence satisfying the first retention condition. For example, when the above "third score threshold" is 0.6 and the above "fifth score threshold" is 0.3, the semantic matching score between the to-be-used user record and the to-be-evaluated sentence is between 0.6 and 0.3.

On the basis of the related contents of the above-mentioned step 4231, after obtaining the at least one to-be-deleted sentence, if the above "at least one candidate sentence" is determined to satisfy the preset correction condition, it can be determined that there is a defect in the to-be-used user record. Therefore, some to-be-deleted sentences with relatively high semantic matching scores can be determined as the to-be-evaluated sentences respectively, and some sentences to be retained can be subsequently selected from the to-be-evaluated sentences.

In step 4232, normalization processing is performed on the semantic matching score between the to-be-used user record and each to-be-evaluated sentence, to obtain a normalized score of each to-be-evaluated sentence.

It should be noted that an implementation of step 4232 is not limited in the embodiments of the present application. For example, any of the existing or future data normalization methods may be employed. As another example, step 4232 may be performed using a normalization method shown in equations (3) to (5).

$$\mu = \frac{\sum_{d=1}^{D} Score^d}{D} \qquad (3)$$

$$\sigma = \sqrt{\frac{\sum_{d=1}^{D}\left(Score^d - \mu\right)^2}{D}} \qquad (4)$$

$$score\_norm_l = \frac{score^l - \mu}{\sigma} \qquad (5)$$

where $score\_norm_l$ represents a normalized score of the l-th to-be-evaluated sentence; $score^l$ represents a semantic matching score between the to-be-used user record and the l-th to-be-evaluated sentence, $l$ is a positive integer, $l \leq L$, L is a positive integer, L represents the number of to-be-evaluated sentences; $Score^d$ represents a semantic matching score between the to-be-used user record and the d-th candidate sentence, $d$ is a positive integer, $d \leq D$, D is a positive integer, and D represents the number of candidate sentences; $\sigma$ represents a variance value of the semantic matching score of the above "at least one candidate sentence"; and $\mu$ represents an average of the semantic matching score of the above "at least one candidate sentence".

In step 4233, at least one first retained sentence satisfying a second retention condition is selected from the at least one to-be-evaluated sentence according to the normalized score of each to-be-evaluated sentence.

The above "second retention condition" may be set in advance. For example, the "second retention condition" may include a semantic matching score between the to-be-used user record and the first retained sentence being higher than a preset sixth score threshold (e.g., 0.3).

The above "first retained sentence" refers to a to-be-evaluated sentence that satisfies the second retention condition.

On the basis of the related contents of the above-mentioned step 4233, after the normalized score of each to-be-evaluated sentence is acquired, some to-be-evaluated sentences with a relatively high normalized score may be determined as the first retained sentences. The semantic information carried in these first retained sentences is close to the semantic information carried in the to-be-used user record.

In step 4234, at least one to-be-deleted sentence is deleted from the at least one candidate sentence, to obtain at least one second retained sentence.

It should be noted that an execution sequence of step 4234 and step 4231 is not limited in the embodiments of the present application. For example, step 4234 and step 4231 may be sequentially executed, step 4231 and step 4234 may be sequentially executed, and step 4234 and step 4231 may be simultaneously executed.

In step 4235, at least one to-be-retained sentence is determined based on the at least one first retained sentence and the at least one second retained sentence.

In an embodiment of the present application, after the at least one first retained sentence and the at least one second retained sentence are obtained, both the first retained sentence and the second retained sentences can be determined as the to-be-retained sentences. The to-be-retained sentences satisfy the condition shown in the Equation (6). The target sentence corresponding to the to-be-used user record can be subsequently selected from the to-be-retained sentences.

$$(sc_b \geq t_1) \quad \text{or} \quad ((t_1 > sc_b > t_2) \ \&\& \ (sc\_norm_b > t_3)) \qquad (6)$$

where $sc_b$ represents a semantic matching score between the to-be-used user record and the b-th to-be-retained sentence; $b$ is a positive integer, b$\leq$B, B is a positive integer, and B represents the number of to-be-retained sentences; $sc\_norm_b$ represents a normalized score of the b-th to-be-retained sentence; $t_1$ represents the third score threshold; $t_2$ represents the fifth score threshold; and $t_3$ represents the sixth score threshold.

On the basis of the related contents of the above-mentioned step 423, if the first selecting result indicates that there is at least one to-be-deleted sentence in the above "at least one candidate sentence", reference may be made to these to-be-deleted sentences, and some to-be-retained sentences may be selected from the candidate sentences. The semantic information carried in the to-be-retained sentences is closer to the semantic information carried in the to-be-used user record.

In step 424, at least one target sentence is determined based on the at least one to-be-retained sentence.

It should be noted that an implementation of step 424 is not limited in the embodiments of the present application. For example, it may specifically include: determining each to-be-retained sentence as a target sentence.

On the basis of the related contents of the above steps 41 to 42, after the at least one candidate sentence is obtained, one or more target sentences may be selected from the candidate sentences according to a preset sentence selection strategy, i.e., the sentence selection strategy shown in step 41-step 42. Thus, the target sentences can represent semantic information carried in the to-be-used user record.

It can be seen from the related contents in the above S41 that after the to-be-used semantic matching result is acquired, some semantic matching sentences with high ranking in semantic matching scores can be selected and determined as the primary sentences, based on the semantic matching score recorded in the to-be-used semantic matching result. Then, a sentence with a low amount of information, in which the number of non-stop words is less than or equal to 1, is deleted from the primary sentences, to obtain some reselected sentences with a large amount of information content. Next, when it is determined that the reselected sentences have relatively low the semantic matching scores, one or more target sentences may be selected from the reselected sentences according to the conditions shown in Equation (6). The target sentences can represent the semantic information carried in the to-be-used user record.

In S42, the to-be-used minutes content is determined according to the to-be-used user record and the at least one target sentence.

It should be noted that an implementation of S42 is not limited in the embodiments of the present application. For example, as shown in FIG. 2, S42 may be specifically include: highlighting the target sentences in the to-be-used record text to display to the user, and displaying the to-be-used user record around the target sentences, so that the user can write the to-be-used minutes content based on display content. Thus, the user can learn the content required for writing the minutes from the display content. As such, it is possible to effectively avoid time consumed by the user in determining the meeting content related to the to-be-used user record through re-listening to the recorded meeting audio, thereby effectively improving the minutes determining efficiency.

It should also be noted that a triggering condition for displaying the above "at least one target sentence" is not limited in the embodiments of the present application. For example, the display may be performed in response to a user-record positioning display request triggered by the user. The "user-record positioning display request" is used to request to display a position of the target sentence corresponding to the user record in the to-be-used record text, and a trigger manner thereof is not limited in the embodiments of the present application. For example, the user may trigger the "user-record positioning display request" by click a telescope button as shown in FIG. 2.

In addition, in order to further improve the minutes determining effect, S42 may be implemented in any one of the implementations of S42 shown in the following Method Embodiment 5 and Method Embodiment 6.

Based on the related contents in S41 to S42, after the to-be-used semantic matching result is acquired, the target sentences corresponding to the to-be-used user record may be determined from the to-be-used record text based on the to-be-used semantic matching result; and the to-be-used minutes content may be determined based on the target sentences and the to-be-used user record. Here, since the target sentences can accurately represent the meeting record contents corresponding to the to-be-used user record, the target sentences can more accurately represent the semantic information carried in the to-be-used user record, such that the to-be-used minutes content determined based on the target sentences can be more accurate, thereby facilitating to determine the minutes accurately.

## Method Embodiment 5

The inventors have also found that in the process of listening to a meeting, the relevant person needs to focus on multiple tasks, determine whether the meeting content is important in real time, and organize words to form a meeting note. However, an error may be generated in a process of performing the determination and writing of the meeting note (for example, misjudging the importance of some matters) due to excessive energy diffusion of the relevant person. In another case, record omission may occur due to participation in meeting discussion or temporary leaving of the meeting relevant person, thereby rendering an inaccuracy of the meeting minutes subsequently determined on the basis of the meeting notes, thus causing difficulties in forming high-quality minutes of the meeting finally.

Based on the above findings, in order to determine the minutes more accurately, another possible implementation of the above S42 is further provided in an embodiment of the present application, which may specifically include S421-S422.

In S421, at least one key supplementary sentence is determined based on at least one target sentence, at least one to-be-used sentence, and a pre-constructed supplementary-sentence determination model.

The above "key supplementary sentence" is used to represent relatively important semantic information not recorded in the to-be-used user record but existing in the to-be-used record text. The above "at least one key supplementary sentence" may be used to represent important semantic information omitted in the to-be-used user record.

The above "supplementary-sentence determination model" is configured to determine the key supplementary sentence based on input data of the supplementary-sentence determination model. This "supplementary-sentence determination model" is a machine learning model, e.g., a machine learning model based on a Graph attention network (GAT) structure.

An implementation of S421 is not limited in the embodiments of the present application. For example, when the above "supplementary-sentence determination model" is a machine learning model based on the GAT structure, S421 may specifically include S4211-S4213.

In S4211, a to-be-used graph is constructed based on the at least one target sentence and the at least one to-be-used sentence.

The above "to-be-used graph" represents an association relationship between different sentences in the to-be-used record text. A process for constructing "to-be-used graph" is not limited in the embodiments of the present application, which may include, for example, steps 51-54.

In step 51, at least one graph node is determined based on the at least one target sentence and the at least one to-be-used sentence. The "at least one graph node" includes at least one record-sentence node and at least one candidate-sentence node.

As an example, step 51 may specifically include steps 511-514.

In step 511, each record-sentence node is constructed, wherein the record-sentence node can represent a target sentence.

It should be noted that an implementation of step 511 is not limited in the embodiments of the present application. For example, step 511 may specifically include: determining the g-th target sentence as the g-th record-sentence node. For another example, step 511 may specifically include: performing semantic feature extraction processing on the g-th target sentence, to obtain a semantic feature of the g-th target sentence; and determining the semantic feature of the g-th target sentence as the g-th record-sentence node. As such, the g-th record-sentence node can represent semantic information carried in the g-th target sentence, thereby enabling the g-th record-sentence node to represent the g-th target sentence, where g is a positive integer, $g \leq G$, G is a positive integer, and G represents the number of target sentences.

The above "semantic feature" represents semantic information carried in a sentence. A process of determining the "semantic feature" is not limited in the embodiments of the present application. For example, the process may be implemented by means of a pre-constructed semantic feature extraction model, for example, BERT shown in FIG. 5.

In step 512, at least one target sentence is deleted from the at least one to-be-used sentence, to obtain at least one non-record sentence.

In step 513, each candidate-sentence node is determined based on a semantic feature of each non-recorded sentence, where the candidate-sentence node represent the corresponding non-recorded sentence, i.e., the to-be-used sentence other than the above "at least one target sentence" in the above "at least one to-be-used sentence".

It should be noted that an implementation of step 513 is not limited in the embodiments of the present application. For example, step 513 may specifically include: determining the a-th non-record sentence as the a-th candidate-sentence node. For another example, step 513 may specifically include: performing semantic feature extraction processing on the a-th non-record sentence, to obtain a semantic feature of the a-th non-record sentence; and determining the semantic feature of the a-th non-record sentence as the a-th candidate-sentence node. As such, the a-th candidate-sentence node can represent the semantic information carried in the a-th non-record sentence, thereby enabling the a-th candidate-sentence node to represent the a-th non-record sentence, where a is a positive integer, a≤A, A is a positive integer, and A represents the number of non-recording sentences.

In step 514, all record-sentence nodes and all candidate-sentence nodes are grouped, to obtain at least one graph node. The "at least one graph node" includes at least one record-sentence node and at least one candidate-sentence node.

Based on the related contents of the above step 51, after the at least one target sentence is obtained, respective nodes in the to-be-used graph can be determined using the target sentences and the above "at least one to-be-used sentence", so that the nodes in the to-be-used graph can respectively represent the to-be-used sentences.

In step 52, a neighbor representation edge corresponding to at least one graph node is constructed according to a preset neighbor description parameter.

The "preset neighbor description parameter" is used to represent a neighbor range of an image node, which will not be limited in the embodiments of the present application. For example, the "preset neighbor description parameter" may include a context window size.

The above "context window size" is used to describe a context range of a sentence, which will not be limited in the embodiments of the present application. For example, it may be specifically 10, which means that 10 sentences adjacent to a text position of a sentence are determined to be the neighbor of the sentence.

The above "neighbor representation edge" represents a connecting edge between two graph nodes having a neighbor relationship. Thus, the "neighbor representation edge" represents a neighbor relationship between two sentences represented by the two graph nodes.

In addition, a process of determining the "neighbor representation edge" is not limited in the embodiments of the present application. For example, it may specifically include: for one graph node, determining a context window corresponding to a sentence represented by the graph node, according to the preset neighbor description parameter; and connecting graph nodes corresponding to any two sentences in the context window corresponding to the sentence represented by the graph node, to obtain a neighbor representation edge between the graph nodes.

Based on the related contents in the above step 52, after the at least one graph node is obtained, a pair of graph nodes having a neighbor relationship may be determined according to a preset neighbor description parameter, and two graph nodes in each pair of graph nodes are connected to each other, to obtain a neighbor representation edge (for example, a connection edge shown as (1) in FIG. 5) corresponding to the graph node. The neighbor representation edge can represent the neighbor relationship between different graph nodes.

In step 53, the candidate-sentence node is connected to respective record-sentence nodes, to obtain correlation representation edges corresponding to respective candidate-sentence nodes.

The above "correlation representation edge" represents a connection between one candidate-sentence node and one record-sentence node.

It can be seen from the related contents in step 53 that after the at least one record-sentence node and the at least one candidate-sentence node are obtained, each candidate-sentence node can be connected to each record-sentence node respectively, but different record-sentence nodes cannot be connected to each other. In this way, the correlation representation edges (for example, connection edges shown as (2) in FIG. 5) corresponding to these candidate-sentence nodes are obtained.

In step 54, the to-be-used graph is determined based on the at least one graph node, the neighbor representation edge corresponding to the at least one graph node, and the correlation representation edges corresponding to the at least one candidate-sentence node.

In an embodiment of the present application, after the at least one graph node, the neighbor representation edge corresponding to the at least one graph node, and the correlation representation edges corresponding to the at least one candidate-sentence node are obtained, the to-be-used graph may be constructed with reference to the graph nodes and corresponding connection edges. The to-be-used graph includes the at least one graph node, the neighbor representation edge corresponding to the at least one graph node, and the correlation representation edges corresponding to the at least one candidate-sentence node.

It can be seen that, for any one of graph nodes in the to-be-used graph, if the graph node belongs to a record-sentence node (i.e., the graph node configured to represent a target sentence), the graph node corresponds to only one kind of connection edge (i.e., a neighbor representation edge). However, if the graph node belongs to a candidate-sentence node (i.e., the graph node configured to represent a non-record sentence), the graph node may correspond to two kinds of connection edges (i.e., a neighbor representation edge and a correlation representation edge).

Based on the related contents of the above-mentioned S4211, after the at least one target sentence is obtained, the target sentence and the above "at least one to-be-used sentence" may be used to construct the to-be-used graph. Each node in the to-be-used graph represents each to-be-used sentence, respectively, and each connection edge in the to-be-used graph represents a connection relationship between different nodes. As such, a process of determining a key supplementary sentence can be subsequently performed based on the to-be-used graph.

In S4212, the to-be-used graph is input into a supplementary-sentence determination model, to obtain a key sentence prediction result output by the supplementary-sentence determination model.

The above "key sentence prediction result" indicates a possibility that each to-be-used sentence belongs to a key supplementary sentence, in particular, a possibility that each non-record sentence belongs to the key supplementary sentence.

A process of determining the "key sentence prediction result" is not limited in the embodiments of the present application. For example, when the above "supplementary-sentence determination model" includes a graph attention module and a classification prediction layer, the process of determining the "key sentence prediction result" may specifically include steps 61-63.

In step 61, a to-be-used feature of each graph node in the to-be-used graph is determined.

The "to-be-used feature of the r-th graph node" represents semantic information carried in a to-be-used sentence represented by the r-th graph node, where r is a positive integer, $r \leq R$, R is a positive integer, and R represents the number of graph nodes.

In addition, a process of determining the "to-be-used feature of the r-th graph node" is not limited in the embodiments of the present application. For ease of understanding, description will be made in combination with two cases below.

In Case 1, when the r-th graph node is represented by a semantic feature of the r-th to-be-used sentence, the "to-be-used feature of the r-th graph node" is the r-th graph node (that is, the semantic feature of the r-th to-be-used sentence).

In Case 2, when the r-th graph node is represented by the r-th to-be-used sentence, the above "supplementary-sentence determination model" may further include an encoding layer, and the process of determining the "to-be-used feature of the r-th graph node" may specifically include: performing encoding processing on the r-th graph node (that is, the r-th to-be-used sentence) by using the encoding layer, to obtain the to-be-used feature of the r-th graph node.

The above "encoding layer" is used to perform encoding processing on input data of the encoding layer, and an implementation thereof is not limited in the embodiments of the present application. For example, it may be implemented using a BERT pre-training model.

In step 62, the to-be-used feature of the at least one graph node and the to-be-used graph are input into the graph attention module, to obtain a graph attention feature of the at least one graph node output by the graph attention module.

The above "graph attention module" is used for performing graph attention processing on input data of the graph attention module, and an implementation thereof is not limited in the embodiments of the present application. For example, the "graph attention module" may include M graph attention layers, e.g., 2 graph attention layers. Here, input data of the first graph attention layer includes the above "to-be-used feature of the at least one graph node" and the to-be-used graph; and input data of the $m_1$-th graph attention layer includes output data of the $(mi-1)$-th graph attention layer and the to-be-used graph, where mi is a positive integer, $2 \leq m_1 \leq M$, and M is a positive integer.

Here, "the $m_2$-th graph attention layer" is used to perform graph attention processing on an input layer of the $m_2$-th graph attention layer, and an operation principle thereof is not limited in the embodiment of the present application. For ease of understanding, description will be made in combination with an example below, where $m_2$ is a positive integer and $1 \leq m_2 \leq M$.

As an example, when input data of the $m_2$-th graph attention layer includes respective unprocessed features of R graph nodes and the to-be-used graph, and output data of the $m_2$-th graph attention layer includes processed features of the R graph nodes. A process of determining the processed feature of the $m_2$-th graph node (that is, the operation principle of the above "$m_2$-th graph attention layer") may specifically include steps 71-74.

In step 71, at least one neighbor node corresponding to the r-th graph node is determined according to the neighbor representation edge corresponding to the r-th graph node, where r is a positive integer and $r \leq R$.

In an embodiment of the present application, for the r-th graph node, an opposite end point of each neighbor representation edge connected to the r-th graph node may be determined as a neighbor node corresponding to the r-th graph node. It can be seen that the r-th graph node is connected to each neighbor node corresponding to the r-th graph node by a neighbor representation edge.

In step 72, according to the unprocessed feature of the r-th graph node and the unprocessed feature of the $d_r$-th neighbor node corresponding to the r-th graph node, a neighbor attention weight feature of the $d_r$-th neighbor node is

determined, where $d_r$ is a positive integer, dr≤$D_r$, $D_r$ is a positive integer, and $D_r$ represents the number of neighbor nodes corresponding to the r-th graph node.

The above "unprocessed feature of the r-th graph node" refers to feature representation for describing the r-th graph node in the above "input data of the $m_2$-th graph attention layer".

In addition, the above "unprocessed feature of the r-th graph node" is not limited in the embodiments of the present application. For example, if $m_2$=1, the "unprocessed feature of the r-th graph node" may be a to-be-used feature of the r-th graph node; If $m_2$≥2, the "unprocessed feature of the r-th graph node" may be feature representation for describing the r-th graph node in the above "output data of the (mz-1)-th graph attention layer", that is, feature representation obtained by performing ($m_2$-1) times of graph attention processing on the to-be-used features of the r-th graph node.

The above "neighbor attention weight feature of the $d_r$-th neighbor node" is a feature obtained by performing semantic interaction between the above "unprocessed feature of the r-th graph node" and the "unprocessed feature of the $d_r$-th neighbor node corresponding to the r-th graph node". A process of determining the "neighbor attention weight feature of the $d_r$-th neighbor node" is not limited in the embodiments of the present application. For example, it can be implemented by using Equation (7):

$$\alpha_{d_r}^r = \frac{\exp(ReLu(\theta_1^T[W_1 h_r || W_1 h_{d_r}]))}{\sum_{x=1}^{D_r} \exp(ReLu(\theta_1^T[W_1 h_r || W_1 h_x]))} \qquad (7)$$

where $\alpha_{d_r}^r$ represents the neighbor attention weight feature of the $d_r$-th neighbor node corresponding to the r-th graph node; $h_r$ represents the unprocessed feature of the r-th graph node; $h_{d_r}$ represents the unprocessed feature of the $d_r$-th neighbor node corresponding to the r-th graph node; $h_x$ represents an unprocessed feature of the x-th neighbor node corresponding to the r-th graph node, and x is a positive integer, x≤$D_Y$; each of $W_1$ and $\theta_1$ is a layer parameter belonging to the $m_2$-th graph attention layer, which may be determined in the process of constructing the above "supplementary-sentence determination model"; and *ReLu*( ) represents an activation function.

It should be noted that an implementation of Equation (7) is not limited in the embodiments of the present application. For example, it can be performed by means of the attention layer, an activation function layer, and a normalization processing layer.

In step 73, a neighbor fusion feature of the r-th graph node is determined according to unprocessed features of $D_r$ neighbor nodes corresponding to the r-th graph node and neighbor attention weight features of the $D_r$ neighbor nodes corresponding to the r-th graph node.

It should be noted that an implementation of step 73 is not limited in the embodiments of the present application. For example, it may be specifically implemented by using equation (8):

$$\hat{h}_r = \delta(\sum_{d_r=1}^{D_r} \alpha_{d_r}^r W_2 h_{d_r}) \qquad (8)$$

where $\hat{H}_r$ represents the neighbor fusion feature of the r-th graph node; $\alpha_{d_r}^r$ represents the neighbor attention weight feature of the $d_r$-th neighbor node corresponding to the r-th graph node; $h_{d_r}$ represents the unprocessed feature of the $d_r$-th neighbor node corresponding to the r-th graph node; $W_2$ is a layer parameter belonging to the $m_2$-th graph attention layer; and $\delta$( ) represents the sigmoid function.

In step 74, a processed feature of the r-th graph node is determined according to the neighbor fusion feature of the r-th graph node.

An implementation of step 74 is not limited in the embodiments of the present application. For example, it may be implemented using Equation (9):

$$h_r' = \delta(W_3 \hat{h}_r) \qquad (9)$$

where $h_r'$ represents the processed feature of the r-th graph node; $\hat{h}_r$ represents the neighbor fusion feature of the r-th graph node; $W_3$ is a layer parameter belonging to the $m_2$-th graph attention layer; and $\delta$( ) represents the sigmoid function

As can be seen from the related contents of the above steps 71 to 74, for the $m_2$-th graph attention layer, graph attention processing can be performed on the input data of the $m_2$-th graph attention layer by means of equations (7) to (9), to obtain the output data of the $m_2$-th graph attention layer.

In fact, since each candidate-sentence node in the to-be-used graph corresponds to two kinds of connection edges (for example, a neighbor representation edge and a correlation representation edge), for optimizing the image attention processing, another possible implementation for determining the above "processed feature of the r-th graph node" is further provided in an embodiment of the present application. In this possible implementation, the process of determining the "processed feature of the r-th graph node" includes not only the above steps 71-73, but also the steps 75-77.

In step 75, a fused information-difference feature of the r-th graph node is determined.

The "fused information-difference feature of the r-th graph node" represents semantic supplementary information of the r-th graph node for the to-be-used user record.

In addition, step 75 is not limited in the embodiments of the present application. For example, step 75 may specifically include step 751-step 755.

In step 751, it is determined whether the r-th graph node belongs to the candidate-sentence node; if yes, steps 752-754 are performed; and if not, step 755 is performed.

In an embodiment of the present application, for the $m_2$-th graph attention layer, after the unprocessed feature of the r-th graph node is obtained by the $m_2$-th graph attention layer, it can be determined whether the r-th graph node belongs to the candidate-sentence node. If the r-th graph node belongs to the candidate-sentence node, it can be determined that there is both a neighbor representation edge of the r-th graph node and a correlation representation edge of the r-th graph node. Therefore, graph attention processing can be performed on the r-th graph node based on the two kinds of connection edges. If the r-th graph node does not belong to the candidate-sentence node, it may be determined that the r-th graph node belongs to the record-sentence node. Therefore, it may be determined that there is only the neighbor representation edge of the r-th graph node. Therefore, graph attention processing can be performed on the r-th graph node based on only the neighbor representation edge of the r-th graph node.

In step 752, an attention weight feature of the g-th record sentence corresponding to the r-th graph node is determined based on the unprocessed feature of the r-th graph node and an unprocessed feature of the g-th record-sentence node, where g is a positive integer, $g \leq G$, and G is a positive integer.

The above "attention weight feature of the g-th record sentence corresponding to the r-th graph node" represents a semantic interaction result between the r-th graph node and the g-th record-sentence node.

In addition, a process of determining the above "attention weight feature of the g-th record sentence corresponding to the r-th graph node" is not limited in the embodiments of the present application. For example, it may be performed by using Equation (10):

$$\beta_g^r = \frac{\exp(ReLu(\theta_2^T[W_4 h_r \| W_4 h_g]))}{\sum_{z=1}^{G} \exp(ReLu(\theta_2^T[W_4 h_r \| W_4 h_z]))} \qquad (10)$$

where $\beta_g^r$ represents the attention weight feature of the g-th record sentence corresponding to the r-th graph node; $h_r$ represents the unprocessed feature of the r-th graph node; $h_g$ represents the unprocessed feature of the g-th record-sentence node; $h_z$ represents an unprocessed feature of the z-th record-sentence node, and z is a positive integer, $z \leq G$; each of $W_4$ and $\theta_2$ is a layer parameter belonging to the $m_2$-th graph attention layer, which can be determined in the process of constructing the above "supplementary-sentence determination model"; and $ReLu()$ represents an activation function.

It should be noted that an implementation of the above Equation (10) is not limited in the embodiments of the present application. For example, it can be performed by means of the attention layer, the activation function layer, and the normalization processing layer.

In step 753, a record fusion feature of the r-th graph node is determined according to unprocessed features of G record-sentence nodes and attention weight features of the G record sentences corresponding to the r-th graph node.

It should be noted that an implementation of step 753 is not limited in the embodiments of the present application. For example, step 753 may be specifically implemented by using equation (11):

$$\hat{e}_r = \delta(\sum_{g=1}^{G} \beta_g^r W_5 h_g) \qquad (11)$$

where $\hat{e}_r$ represents a record fusion feature of the r-th graph node; $\beta_g^r$ represents the attention weight feature of the g-th record sentence corresponding to the r-th graph node; $h_g$ represents the unprocessed feature of the g-th record-sentence node; $W_5$ is a layer parameter belonging to the the $m_2$-th graph attention layer; and $\delta()$ represents the sigmoid function.

In step 754, the fused information-difference feature of the r-th graph node is determined based on the neighbor fusion feature of the r-th graph node and a record fusion feature of the r-th graph node.

It should be noted that an implementation of step 754 is not limited in the embodiments of the present application.

For example, step 754 may be specifically implemented using Equation (12):

$$Differ_r = \hat{h}_r - \hat{e}_r \qquad (12)$$

where $Differ_r$ represents the fused information-difference feature of the r-th graph node; $\hat{h}_r$ represents the neighbor fusion feature of the r-th graph node; and $\hat{e}_r$ represents the record fusion feature of the r-th graph node.

In step 755, a preset zero vector is determined as the fused information-difference feature of the r-th graph node.

The above "preset zero vector" is a vector, each elements of which is zero. A data dimension of the "preset zero vector" is not limited in the embodiments of the present application. For example, the data dimension of the "preset zero vector" is consistent with that of the above ($\hat{h}_r - \hat{e}_r$), so as to ensure that the feature representation of each record-sentence node always has an identical data dimension with feature representation of each candidate-sentence node.

It can be seen from the above-mentioned contents in step 75 that, for the $m_2$-th graph attention layer, after the unprocessed feature of the r-th graph node is obtained by the $m_2$-th graph attention layer, the $m_2$-th graph attention layer can determine the fused information-difference feature of the r-th graph node according to a connection edge type of the r-th graph node.

In step 76, the neighbor fusion feature of the r-th graph node is spliced with the fused information-difference feature of the r-th graph node, to obtain a fusion splicing feature of the r-th graph node.

In step 77, the processed feature of the r-th graph node is determined based on the fusion splicing feature of the r-th graph node.

An implementation of step 77 is not limited in the embodiments of the present application. For example, step 77 may be implemented using Equation (13):

$$h'_r = \delta(W_6(\hat{h}_r || Differ_r)) \qquad (13)$$

where $h'_r$ represents the processed feature of the r-th graph node; $\hat{h}_r$ represents the neighbor fusion feature of the r-th graph node; $Differ_r$ represents the fused information-difference feature of the r-th graph node; $||$ represents splicing processing; ($\hat{h}_r||Differ_r$) represents the fusion splicing feature of the r-th graph node; $W_6$ is a layer parameter belonging to the the $m_2$-th graph attention layer; and $\delta(\ )$ represents the sigmoid function.

As can be seen from the related contents of the above steps 75 to 77, for the $m_2$-th graph attention layer, the $m_2$-th graph attention layer may perform graph attention processing on the input data of the $m_2$-th graph attention layer, by means of Equations (7) to (8), and (10) to (13), to obtain the output data of the $m_2$-th graph attention layer.

As can be seen from the relevant content of the above "graph attention module", the "graph attention module" may include multiple graph attention layers, and each graph attention layer may be used to implement the graph attention processing by means of Equations (7) - (8), and (10) - (13).

Based on the related contents of the above step 62, for the supplementary-sentence determination model, after the to-be-used feature of each graph node in the to-be-used graph is obtained, the graph attention module in the supplementary-sentence determination model is used to perform the graph attention processing on the to-be-used features of these graph nodes, to obtain and output graph attention features of the graph nodes.

In step 63, a graph attention feature of at least one graph node is input into the classification prediction layer, to obtain a key sentence prediction result output by the classification prediction layer.

The above "classification prediction layer" is used to perform binary-classification prediction processing on input data of the classification prediction layer, that is, to determine whether each to-be-used sentence belongs to a key sentence. An implementation of the "classification prediction layer" is not limited in the embodiments of the present application. For example, any of the existing or future classification networks may be used to implement the "classification prediction layer".

On the basis of the related contents of the above steps 61 to 63, the supplementary-sentence determination model, which includes the graph attention module and the classification prediction layer, may perform key supplementary-sentence determination processing on the above "at least one to-be-used sentence" according to a key sentence extraction process shown in FIG. 5, to obtain and output a key sentence prediction result.

The above "supplementary-sentence determination model" may be constructed in advance based on a labeled corpus of a key sentence. A processing of constructing the "supplementary-sentence determination model" is not limited in the embodiments of the present application. For example, it may be implemented using any one of existing or future model construction methods.

The above "labeled corpus of the key sentence" includes a second meeting-text sentence set, a sample record sentence corresponding to the second meeting-text sentence set, and a key supplementary-sentence label corresponding to the second meeting-text sentence set.

The above "second meeting-text sentence set" is obtained by performing sentence segmentation on the meeting transcription text of the sample meeting. A relationship between the "second meeting-text sentence set" and the above "first meeting-text sentence set" is not limited in the embodiments of the present application. For example, the "second meeting-text sentence set" and the "first meeting-text sentence set" may be identical or different.

The above "sample record sentence corresponding to the second meeting-text sentence set" represents semantic information carried in a user record corresponding to the second meeting-text sentence set, which belongs to the second meeting-text sentence set. It should be noted that a process of obtaining the above "sample record sentence corresponding to the second meeting-text sentence set" is not limited in the embodiments of the present application. For example, it may be obtained by manually labeling. As another example, it can be determined by means of the above "semantic matching model".

The above "key supplementary-sentence label corresponding to the second meeting-text sentence set" represents an actual key supplementary sentence in the second meeting-text sentence set, which will not be limited in the embodiments of the present application. For example, the "key supplementary-sentence label corresponding to the second meeting-text sentence set" may be expressed as $\{(si, labi), (s_2, lab_2), ... , (su, labu)\}$, where su represents the u-th sentence in the second meeting-text sentence set, and labu represents whether the u-th sentence in the second meeting text sentence set actually belongs to the key supplementary sentence. labu=1 indicates that the u-th sentence actually belongs to the key supplementary sentence, while labu=0 indicates that the u-th sentence actually does not belong to the key supplementary sentence.

It can be seen from the related contents of the above S4212 that after the to-be-used graph is acquired, key sentence determination processing can be performed on the to-be-used graph by means of a pre-constructed supplementary-sentence determination model, to obtain and output a key sentence prediction result corresponding to the to-be-used graph. The key sentence prediction result can indicate a possibility that each to-be-used sentence belongs to a key supplementary sentence, in particular, a possibility that each non-record sentence belongs to a key supplementary sentence.

In S4213, at least one key supplementary sentence is determined based on the key sentence prediction result.

As an example, when the above "key sentence prediction result" includes a supplementary-sentence score of each to-be-used sentence, S4213 may specifically include: selecting a key supplementary sentence satisfying a preset key supplementary condition from all to-be-used sentences according to the supplementary-sentence score of each to-be-used sentence.

The above "preset key supplementary condition" may be set in advance. For example, the "preset key supplementary condition" may specifically be: the supplementary-sentence score being higher than a preset seventh score threshold. For another example, after the to-be-used sentences are ranked in a descending order of the supplementary-sentence scores, the "preset key supplementary condition" may be specifically: a ranking number being lower than the preset fifth number threshold.

It can be seen from the related contents of the above-mentioned S4213 that after the key sentence prediction result is obtained, it is possible to determine, some to-be-used sentences with relatively high supplementary-sentence scores can be determined as the key supplementary sentences, with reference to the supplementary-sentence score recorded by the key sentence prediction result. The key supplementary sentence can better represent the semantic supplementary information for the above "to-be-used user record".

On the basis of the relevant content of the above-mentioned S421, after at least one target sentence corresponding to the to-be-used user record is obtained, the supplementary-sentence determination model can be used to determine, with reference to the target sentences, some key supplementary sentences from all the to-be-used sentences. These key supplementary sentences can represent semantic supplementary information for the above "to-be-used user record". Subsequently, the minutes content determination process can be performed on the basis of the key supplementary sentences.

In S422, the to-be-used minutes content is determined based on the to-be-used user record, the at least one target sentence, and the at least one key supplementary sentence.

It should be noted that an implementation of S422 is not limited in the embodiments of the present application. For example, as shown in FIG. 2, S422 may specifically include: displaying the key supplementary sentences, the target sentences, and the to-be-used user record to the user, so that the user can write the to-be-used minutes content based on the displayed contents. As such, the user can learn relatively complete meeting record content required for writing the minutes from the displayed contents, thereby being effectively to avoid time consumed by the user in determining the meeting content related to the to-be-used user record through re-listening to the recorded meeting audio, and thus effectively improving the minutes determining efficiency.

It should also be noted that a triggering condition for displaying the above "at least one key supplementary sentence" is not limited in the embodiments of the present application. For example, the display may be performed in response to a key supplementary-sentence display request triggered by the user. The "key supplementary-sentence display request" is used to request to display a key supplementary sentence for the user record. A trigger manner of the "key supplementary-sentence display request" is not limited in the embodiments of the present application. For example, the user may trigger the "key supplementary-sentence display request" by clicking a "leak finding and filling" button as shown in FIG. 2.

Further, in order to determining the minutes more accurately, the S422 may be implemented in any of the implementations of the S422 shown in the Method Embodiment 6.

On the basis of the related contents of the above-mentioned S421 to S422, after at least one target sentence corresponding to the to-be-used user record is obtained, some key supplementary sentences can be determined from the to-be-used sentences with reference to the target sentences. As such, the key supplementary sentences can represent semantic supplementary information for the above "to-be-used user record". Then, the to-be-used minutes content is determined, with reference to these key supplementary sentences, these target sentences, and the to-be-used user record.

### Method Embodiment 6

In fact, in order to determining the minutes more accurately, a key-point prompt sentence can be extracted from the key supplementary sentence, so that the key-point prompt sentence can describe the semantic information carried in the key supplementary sentence with more concise content. Based on this, another possible implementation of S422 is further provided in an embodiment of the present application, which may specifically include S4221-S4222.

In S4221, key-point extraction processing is performed on each key supplementary sentence, to obtain key point content of each key supplementary sentence.

A "key-point content of the f-th key supplementary sentence" refers to core semantic information of the f-th key supplementary sentence, where f is a positive integer, f≤F, F is a positive integer, and F represents the number of key supplementary sentences.

In addition, a process of determining the above "key-point content of the f-th key supplementary sentence" is not limited in the embodiments of the present application. For example, any existing or future sentence core extraction method (for example, a minutes extraction method, a sentence simplification method) may be used for implementation.

For another example, another possible implementation of determining the above "key-point content of the f-th key supplementary sentence" is further provided in an embodiment of the present application, which may specifically include: determining the key-point content of the f-th key supplementary sentence based on the f-th key supplementary sentence and a pre-constructed key-point extraction model.

The above "key-point extraction model" is used to perform key-point content extraction processing on input data of the key-point extraction model. The "key-point extraction model" may be a machine learning model.

In addition, the above "key-point extraction model" is not limited in the embodiments of the present application. For example, the "key-point extraction model" may be a text generation model based on Encoder-Decoder (ED).

Further, the process of determining the above "key-point content of the f-th key supplementary sentence" is not limited in the embodiments of the present application, which may include, for example, inputting the f-th key supplementary sentence into the pre-constructed key-point extraction model, to obtain the key-point content of the f-th key supplementary sentence output by the key-point extraction model. Here, the key-point extraction model is constructed based on a large number of first sample sentences and actual key-point contents corresponding to the first sample sentences. The "actual key-point contents corresponding to the first sample sentences" can be determined by manually labeling.

In fact, the above "key supplementary sentence" may have information omitted (for example, incomplete information such as an omitted pronoun). Therefore, in order to improve an accuracy of the key-point content extraction, the key-point content extraction process may be performed on the "key supplementary sentence" with reference to context information of the "key supplementary sentence". Based on this, a possible implementation of the process of determining the above "key-point content of the f-th key supplementary sentence" is further provided in an embodiment of the present application, which may specifically include S42211- S42212.

In S42211, context information of the f-th key supplementary sentence is determined based on the at least one to-be-used sentence.

The above "context information of the f-th key supplementary sentence" is used to describe semantic information of context of the f-th key supplementary sentence, which will not be limited in the embodiments of the present application. For example, the "context information of the f-th key supplementary sentence" may include one or more to-be-used sentences.

In addition, a process of determining the above "context information of the f-th key supplementary sentence" is not limited in the embodiments of the present application, which may specifically include, for example, determining all the to-be-used sentences as the context information of the f-th key supplementary sentence.

For another example, the process of determining the above "context information of the f-th key supplementary sentence" may specifically include: extracting the context information of the f-th key supplementary sentence from the "at least one to-be-used sentence" according to a text position of the f-th key supplementary sentence and a preset context window. All sentences in the "context information of the f-th key supplementary sentence" are located in the preset context window. Here, the "preset context window" may be set in advance.

In S42212, the f-th key supplementary sentence and the context information of the f-th key supplementary sentence are input into a key-point extraction model, to obtain the key-point content of the f-th key supplementary sentence output by the key-point extraction model.

The above "key-point extraction model" may be constructed based on a large number of second sample sentences, context information of the second sample sentences, and actual key-point content corresponding to the second sample sentences. The "actual key-point content corresponding to the second sample sentence" may be determined by manually labeling.

In addition, a network structure of the "key-point extraction model" is not limited in the embodiments of the present application. For example, any of the existing or future text generation models may be used to implement the "key-point extraction model".

In fact, a sentence closer to the f-th key supplementary sentence is more likely to carry the omitted semantic information of the f-th key supplementary sentence. Therefore, to further improve the accuracy of the key-point content extraction, the key-point content extraction processing may be performed on the f-th key supplementary sentence with reference to a text position of each sentence in the context information of the f-th key supplementary sentence. Based on this, a possible implementation of the above "key-point content extraction model" is further provided in an embodiment of the present application, which may specifically include an encoder, a position weighting module, an attention module, a fusion module, and a decoder.

To facilitate understanding of an operation principle of the above "key-point content extraction model", description will be made by taking the process of determining the "context information of the f-th key supplementary sentence" as an example.

As an example, when the above "context information of the f-th key supplementary sentence" includes K reference sentences, the process of determining the "context information of the f-th key supplementary sentence" may specifically include steps 81-85.

In step 81, encoding processing is performed on the f-th key supplementary sentence and each reference sentence by using an encoder, to obtain an encoding feature of the f-th key supplementary sentence and an encoding feature of each reference sentence.

The above "encoder" is used to perform encoding processing on input data of the encoder, which will not be limited in the embodiments of the present application. For example, it may be implemented using any existing or future encoding network, e.g., BERT pre-training model.

The above "encoding feature of the f-th key supplementary sentence" represents semantic information carried in the f-th key supplementary sentence. A process of determining the "encoding feature of the f-th key supplementary sentence" may specifically include: inputting the f-th key supplementary sentence into the encoder, to obtain the encoding feature of the f-th key supplementary sentence output by the encoder.

The "encoding feature of the k-th reference sentence" represents semantic information carried in the k-th reference sentence. A process of determining the "encoding feature of the k-th reference sentence" may specifically include: performing encoding processing on the k-th reference sentence by using the encoder, to obtain the encoding feature of the k-th reference sentence output by the encoder, where k is a positive integer, $k \leq K$, and K is a positive integer.

In step 82, the encoding features of K reference sentences are input into the position weighting module, to obtain position weighting features of the K reference sentences output by the position weighting module.

The "position weighting feature of the k-th reference sentence" represents semantic information and text position influence information carried in the k-th reference sentence.

The "position weighting module" is configured to perform position weighting processing on the input data of the position weighting module. An operation principle of the "position weighting module" is not limited in the embodiments of the present application. For ease of understanding, description will be made by taking a process of determining the "position weighting feature of the k-th reference sentence" as an example below.

As an example, when module parameters of the "position weighting module" include K position weighting vectors, the above process of determining the "position weighting feature of the k-th reference sentence" may specifically include steps 821-822.

In step 821, a position excitation weight corresponding to the k-th reference sentence is determined based on a dot product of the k-th position weighting vector and the encoding feature of the k-th reference sentence.

The above "k-th position weighting vector" indicates an influence degree of the text position of the k-th reference sentence on the above "f-th key supplementary sentence". The "k-th position weighting vector" belongs a module parameter of the "position weighting module", such that the "k-th position weighting vector" can be determined in a process of constructing the "key-point extraction model".

A data dimension of the above "k-th position weighting vector" is not limited in the embodiments of the present application. For example, the data dimension of the "k-th position weighting vector" can be consistent with that of the "encoding feature of the k-th reference sentence".

The above "position excitation weight corresponding to the k-th reference sentence" indicates an information supplementary degree of the semantic information carried in the k-th reference sentence to the "f-th key supplementary sentence". Moreover, a process of determining the "position excitation weight corresponding to the k-th reference sentence" is not limited in the embodiments of the present application. For example, it may be performed by using the Equation (14):

$$u_k = \delta\left(\text{POSMatrix}_k{}^T h_{f,[CLS]}\right) \qquad (14)$$

where $u_k$ represents the position excitation weight corresponding to the k-th reference sentence; $h_{f,[CLS]}$ represents an encoding feature of a character string [the k-th reference sentence, a preset sentence identifier]; POSMatrix represents a position weighting matrix which includes K position weighting vectors, and POSMatrix belongs to the module parameter of the above "position weighting module", which can be determined in the process of constructing the "key-point extraction model"; $\text{POSMatrix}_k$ represents the k-th position weighting vector; $\text{POSMatrix}_k{}^T$ represents a transpose of the k-th position weighting vector; and $\delta(\ )$ represents the sigmoid function.

In step 822, a product of the position excitation weight corresponding to the k-th reference sentence and the encoding feature of the k-th reference sentence is determined as a position weighting feature of the k-th reference sentence, as shown in Equation (15):

$$\hat{h}_k = u_k * h_f = \delta\left(\text{POSMatrix}_k{}^T h_{f,[CLS]}\right) * h_f \qquad (15)$$

where $\hat{h}_k$ represents the position weighting feature of the k-th reference sentence; $u_k$ represents the position excitation weight corresponding to the k-th reference sentence; $h_f$ represents the encoding feature of the k-th reference sentence; $h_{f,[CLS]}$ represents an encoding feature of a character string [the k-th reference sentence, a preset sentence identifier]; POSMatrix represents a position weighting matrix which includes K position weighting vectors, and POSMatrix belongs to the module parameter of the above "position weighting module", which can be determined in the process of constructing the "key-point extraction model"; $\text{POSMatrix}_k$ represents the k-th position weighting vector; $\text{POSMatrix}_k{}^T$ represents a transpose of the k-th position weighting vector; and $\delta(\ )$ represents the sigmoid function.

it can be seen from the related contents of the above-mentioned step 82 that, for the key-point extraction model, after the encoding feature of the k-th reference sentence is obtained, the position weighting module in the key-point extraction model may be used to perform fusion processing on the encoding feature of the k-th reference sentence and the position weighting vector corresponding to the k-th reference sentence, to obtain the position weighting feature of the k-th reference sentence. As such, the "position weighting feature of the k-th reference sentence" can better represent the semantic supplementary information carried in the k-th reference sentence.

In step 83, the position weighting feature of the k-th reference sentence and the encoding feature of the f-th key supplementary sentence are input into the attention module, to obtain the k-th fusion feature corresponding to the f-th key supplementary sentence output by the attention module, where k is a positive integer, k≤K, and K is a positive integer.

The above "attention module" is used to perform attention processing on input data of the attention module. An implementation of the "attention module" is not limited in the embodiments of the present application. For example, it may be implemented using a multi-head attention network.

The above "k-th fusion feature corresponding to the f-th key supplementary sentence" represents fused semantic information of the k-th reference sentence and the f-th key supplementary sentence.

In addition, a process of obtaining the above "k-th fusion feature corresponding to the f-th key supplementary sentence" is not limited in the embodiments of the present application. For example, when the above "attention module" is implemented using a multi-head attention network, the encoding feature of the f-th key supplementary sentence may be used as a query parameter (i.e., Q parameter) required by the multi-head attention network, and the position weighting feature of the k-th reference sentence may be used as the other two parameters (i.e., K parameter and V parameter) required by the multi-head attention network. As such, the multi-head attention network can be used to realize information fusion through the multi-head attention mechanism to obtain the "k-th fusion feature corresponding to the f-th key supplementary sentence".

In step 84, the K fusion features corresponding to the f-th key supplementary sentence are input into the fusion module, to obtain representation features of the f-th key supplementary sentence output by the fusion module.

The above "fusion module" is used to perform fusion processing on input data of the fusion module. An implementation of the "fusion module" is not limited in the embodiments of the present application. For example, the "fusion module" can be implemented by a max pooling method.

The above "representation feature of the f-th key supplementary sentence" represents semantic fusion information of the f-th key supplementary sentence and the K reference sentences.

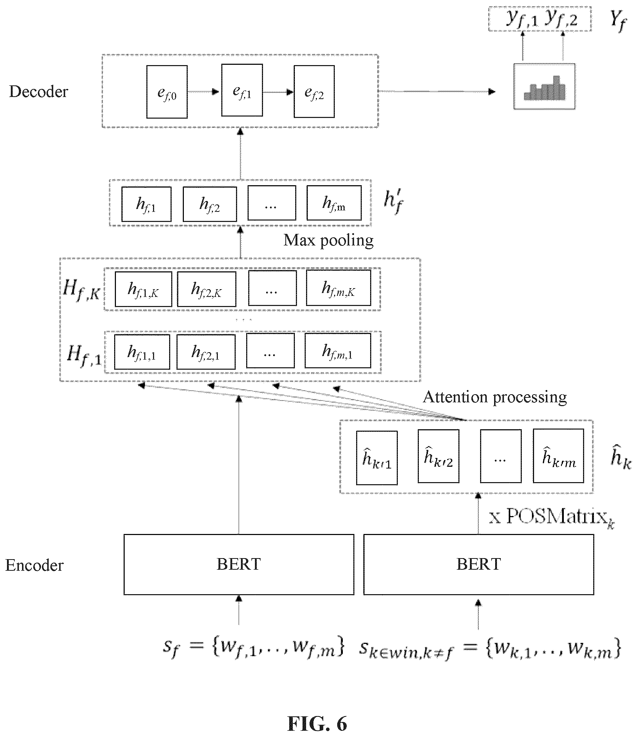

In addition, the above "representation feature of the f-th key supplementary sentence" is not limited in the embodiments of the present application. For example, as shown in FIG. 6, the "representation feature of the f-th key supplementary sentence" may be specifically obtained by: performing max pooling processing on the first fusion feature corresponding to the f-th key supplementary sentence, the second fusion feature corresponding to the f-th key supplementary sentence, ..., and the K-th fusion feature corresponding to the f-th key supplementary sentence, to obtain the "representation feature of the f-th key supplementary sentence". As such, the "representation feature of the f-th key supplementary sentence" can more accurately represent the semantic information carried in the f-th key supplementary sentence.

In step 85, the representation feature of the f-th key supplementary sentence is input into the decoder, to obtain the key-point content of the f-th key supplementary sentence output by the decoder.

The above "decoder" is used for decoding input data of the decoder. An implementation of the above "decoder" is not limited in the embodiments of the present application, which may be implemented using, for example, any existing or future decoding network (i.e., Decoder).

As can be seen from the related contents of the above steps 81 to 85, for the key-point extraction model including the encoder, the position weighting module, the attention module, the fusion module, and the decoder, the key-point extraction model can accurately determine the key-point content of the f-th key supplementary sentence, by implementing the key-point content generation process shown in FIG. 6.

It should be noted that, for FIG. 6, $s_f$ represents the f-th key supplementary sentence; $s_{k \in win, k \neq f}$ represents the k-th reference sentence; $\hat{h}_k$ represents the position weighting feature of the k-th reference sentence, $k \in \{1, 2, 3, ... , K\}$; $POSMatrix_k$ represents the k-th position weighting vector; $H_{f,k}$ represents the k-th fusion feature corresponding to the f-th key supplementary sentence, $k \in \{1,2,3, ... , K\}$; $h'_f$ represents the representation feature of the f-th key supplementary sentence; and $Y_f$ represents key-point content of the f-th key supplementary sentence.

It can be seen from the related contents of the above S4221 that after the f-th key supplementary sentence is obtained, context information of the f-th key supplementary sentence can be determined; and then the key-point content extraction processing is performed, by the pre-constructed key-point extraction model, on the f-th key supplementary sentence with reference to the context information of the f-th key supplementary sentence, to obtain and output the key-point content of the f-th key supplementary sentence. As such, the "key-point content of the f-th key supplementary sentence" can more accurately represent the core semantic information of the f-th key supplementary sentence, where f is a positive integer, f≤F, F is a positive integer, and F represents the number of key supplementary sentences.

In S4222, the to-be-used minutes content is determined, based on the to-be-used user record, the at least one target sentence, the at least one key supplementary sentence, and the key-point content of the at least one key supplementary sentence.

It should be noted that an implementation of S4222 is not limited in the embodiments of the present application. For example, as shown in FIG. 2, S4222 may specifically include: displaying the key supplementary sentence and the key-point content thereof, the target sentence, and the to-be-used user record to the user. The user can write the to-be-used minutes content based on the displayed contents. As such, the user can learn relatively complete meeting record content required for writing the minutes from the displayed contents, thereby being effectively to avoid time consumed by the user in determining the meeting content related to the to-be-used user record through re-listening to the recorded meeting audio, and thus effectively improving the minutes determining efficiency.

It should also be noted that a triggering condition for displaying the above "key-point contents of at least one key supplementary sentence" is not limited in the embodiments of the present application. For example, the display may be performed in response to a key-point supplementary display request triggered by the user. The "key-point supplementary display request" is used to request to display the key-point content of the key supplementary sentence for the user record. A trigger manner of the "key-point supplementary display request" is not limited in the embodiments of the present application. For example, the user may trigger the "key-point supplementary display request" by click the "leak finding and filling" button as shown in FIG. 2.

Based on the related contents of the above-mentioned S4221 to S4222, after at least one key supplementary sentence for the to-be-used user record is obtained, the key-point content extraction processing can be performed on each key supplementary sentence, to obtain the key-point content of each key supplementary sentence. As such, the key-point contents can be used to more concisely represent important information omitted in the to-be-used user record, so that the user can learn the key supplementary information of the to-be-used user record from the key-point contents more quickly, thereby improving the minutes determining efficiency.

## Method Embodiment 7

In fact, in order to determining the minutes more accurately, the minutes content writing processing can be realized by means of a human-computer interaction process. Based on this, another possible implementation of S4 is provided in an embodiment of the present application, which may specifically include, for example, steps 91-92.

In step 91, prompt information is determined according to the to-be-used user record and the to-be-used semantic matching result.

The above "prompt information" refers to information provided to a user in the process of the user writing minutes, which will not be limited in the embodiments of the present application. For example, the "prompt information" may include at least one of a to-be-used user record, at least one target sentence corresponding to the to-be-used user record, at least one key supplementary sentence, and key-point contents of the at least one key supplementary sentence.

Based on the related contents of the above-mentioned step 91, after the to-be-used user record and the to-be-used semantic matching result are obtained, the prompt information can be determined based on the to-be-used user record and the to-be-used semantic matching result. Subsequently, the user can write the minutes content based on the prompt information.

In step 92, the prompt information is displayed to the user, such that the user writes the to-be-used minutes content with reference to the prompt information.

A process of displaying the above "prompt information" is not limited in the embodiments of the present application. For example, it may specifically include (1) to (5).

(1) After the user enters the to-be-used user record (e.g., "reasonable price, channel operability" or "distinguished pricing, differentiation" shown in FIG. 2), the to-be-used user record and a positioning trigger button (e.g., a telescope shown in FIG. 2) corresponding to the to-be-used user record may be displayed.

(2) After the user clicks the positioning trigger button corresponding to the to-be-used user record, at least one target sentence corresponding to the to-be-used user record may be displayed in the to-be-used record text according to a first display mode, such that the user can view each target sentence displayed according to the first display mode in the to-be-used record text. Here, the "first display mode" may be set in advance. For example, as shown in FIG. 2, the "first display mode" may include: highlighting in a first color (e.g. yellow), and displaying a correspondence between the target sentence and the to-be-used user record.

(3) After the user triggers the key supplementary sentence display request (for example, by clicking the "leak finding and filling" button shown in FIG. 2), the above "at least one key supplementary sentence" may be displayed in the to-be-used record text according to a second display mode, such that the user can view each key supplementary sentence displayed according to the second display mode in the to-be-used record text. The "second display mode" may be set in advance. For example, as shown in FIG. 2, the "second display mode" may include: highlighting in a second color (e.g. red).

(4) After the user triggers the key-point supplementary display request (for example, by clicking the "leak finding and filling" button shown in FIG. 2), the key-point content of each key supplementary sentence may be displayed in a third display mode. The "third display mode" may be set in advance. For example, as shown in FIG. 2, the "third display mode" may include: displaying a correspondence between each key supplementary sentence and the key-point content of each key supplementary sentence.

It can be seen from the related contents of the above steps 91 to 92 that after the to-be-used user record and the to-be-used semantic matching result are obtained, prompt information may be determined based on the to-be-used user record and the to-be-used semantic matching result (e.g., "to-be-used user record", "target sentence", "key supplementary sentence"; and "key-point content of the key supplementary sentence" shown in FIG. 2), and then the prompt information is displayed to the user. The user can write the to-be-used minutes content with reference to the prompt information, thereby improving the minutes determining effect.

In addition, in order to further improve minutes writing experience of the user, the prompt information (for example, the key supplementary sentence and the key-point content thereof) may be updated, according to the minutes content inputted by the user in real time. Based on this, another possible implementation of the minutes determining method is further provided in an embodiment of the present application. In this implementation, when the above "prompt information" includes at least one key supplementary sentence, after step 92, the minutes determining method may further include steps 93-97, in addition to all or part of the steps described above.

In step 93, a current minutes writing sentence input by the user is acquired.

The above "current minutes writing sentence" represents a sentence entered in real time in a process of a user writing the minutes content.

In step 94, according to semantic matching representation data between the current minutes writing sentence and each key supplementary sentence, a to-be-deleted supplementary sentence satisfying a fifth matching condition is searched from at least one key supplementary sentence, to obtain a search result.

The "semantic matching representation data between the current minutes writing sentence and the f-th key supplementary sentence" represents a similarity between semantic information carried in the current minutes writing sentence and the semantic information carried in the f-th key supplementary sentence, where f is a positive integer, $f \leq F$, F is a positive integer, and F represents the number of key supplementary sentences.

In addition, a process of determining the "semantic matching representation data between the current minutes writing sentence and the f-th key supplementary sentence" is not limited in the embodiments of the present application. For example, it may be performed by any existing or future semantic matching method. As another example, it may be implemented by means of the above "semantic matching model".

The above "fifth matching condition" may be set in advance. For example, the "fifth matching condition" may specifically be that the semantic matching representation data between the current minutes writing sentence and the to-be-deleted supplementary sentence reaches a preset semantic matching threshold.

The above "to-be-deleted supplementary sentence" represents a key supplementary sentence satisfying the fifth matching condition.

The above "search result" represents whether there is the to-be-deleted supplementary sentence in the at least one key supplementary sentence.

In step 95, if the search result indicates that there is at least one to-be-deleted supplementary sentence in the at least one key supplementary sentence, the at least one to-be-deleted supplementary sentence is deleted from the at least one key supplementary sentence.

In an embodiment of the present application, if the search result indicates that there is the at least one to-be-deleted supplementary sentence in the at least one key supplementary sentence, it can be determined that semantic information carried in the at least one to-be-deleted supplementary sentence has been expressed by the current minutes writing sentence. Therefore, in order to avoid interference with the subsequent summary writing process caused by the to-be-deleted supplementary sentence, the at least one to-be-deleted supplementary sentence can be directly deleted from the at least one key supplementary sentence. In this way, the to-be-deleted supplementary sentence does not exist in at least one key supplementary sentence after the deletion. As such, the to-be-deleted supplementary sentence subsequently is no longer displayed as prompt information to the user.

In step 96, the prompt information is updated according to the at least one key supplementary sentence.

It should be noted that an implementation of step 96 is not limited in the embodiments of the present application. For ease of understanding, description will be made in combination with two cases below.

In case 1, when the above "prompt information" includes at least one key supplementary sentence, the step 96 may specifically include: after obtaining the at least one key supplementary sentence after the deletion, updating the prompt information by the at least one key supplementary sentence after the deletion. The updated prompt information no longer includes the above "at least one to-be-deleted supplementary sentence". As such, it is possible to effectively avoid influence of the to-be-deleted supplementary sentence on the subsequent minutes writing process.

In case 2, when the above "prompt information" includes at least one key supplementary sentence and the key-point content of the at least one key supplementary sentence, step 96 may specifically include: updating the prompt information according to the at least one key supplementary sentence and the key-point content of the at least one key supplementary sentence.

It can be seen that after the at least one key supplementary sentence after the deletion is obtained, the prompt information can be updated by using the at least one key supplementary sentence after the deletion and the key-point content of the at least one key supplementary sentence after the deletion. The updated prompt information no longer includes the above "at least one to-be-deleted supplementary sentence" and the key-point content of the above "at least one to-be-deleted supplementary sentence", such that the to-be-deleted supplementary sentence and the key content thereof are no longer displayed to the user as the prompt information, thereby effectively avoiding influence of the to-be-deleted supplementary sentence and the key-point content thereof on the subsequent minutes writing process.

In step 97, it is determined whether a preset stopping condition is reached; if yes, a process for updating the prompt information is ended; and if not, the process returns to step 92 and then step 92 and subsequent steps thereof are performed.

The above "preset stopping condition" may be set in advance. For example, the preset stopping condition may be specifically that a minutes completing request triggered by the user is received, or that all key supplementary sentences have been deleted.

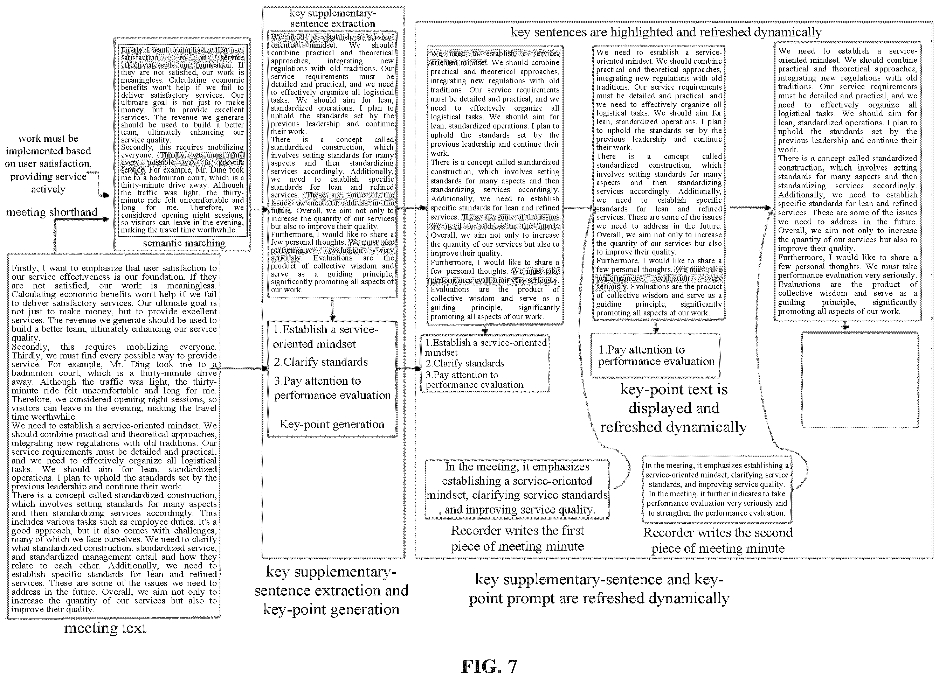

As can be seen from the related contents in the above steps 91 to 97, as shown in FIG. 7, in the process of the user continuously writing minutes content, the prompt information displayed to the user can be continuously decreased (for example, the key supplementary sentences displayed to the user are continuously reduced), in order to display information still required for writing the minutes by the user in real time. The process of updating the prompt information is stopped when the user completes the minutes content (or all the key supplementary sentences have been deleted), which is advantageous for improving the minutes writing effect.

Based on the minutes determining method provided in the above method embodiments, a minutes determining device is further provided in an embodiment of the present application, which is explained and described below with reference to the accompanying drawings.

## Device Embodiment

A minutes determining device is described, and related contents can be obtained with reference to Method Embodiments described above.

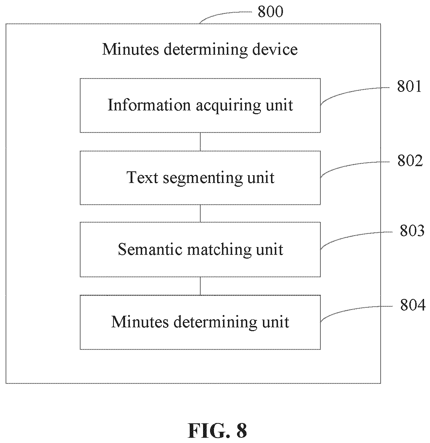

Referring to FIG. 8, a schematic diagram of a minutes determining device according to an embodiment of the present application is shown in FIG. 8.

A minutes determining device 800 according to an embodiment of the present application includes: an information acquiring unit 801, a text segmenting unit 802, a semantic matching unit 803 and a minutes determining unit 804.

The information acquiring unit 801 is configured to acquire a to-be-used user record and a to-be-used record text.

The text segmenting unit 802 is configured to perform sentence segmentation processing on the to-be-used record text, to obtain at least one to-be-used sentence.

The semantic matching unit 803 is configured to perform semantic matching processing on the to-be-used user record and the at least one to-be-used sentence, to obtain a to-be-used semantic matching result.

The minutes determining unit 804 is configured to determine to-be-used minutes content according to the to-be-used user record and the to-be-used semantic matching result.

In a possible implementation, the semantic matching unit 803 is specifically configured to determine the to-be-used semantic matching result according to the to-be-used user record, the at least one to-be-used sentence, and a pre-constructed semantic matching model, where the semantic matching model is configured to perform semantic matching processing on input data of the semantic matching model.

In a possible implementation, the semantic matching unit 803 includes: a first determining subunit, a matching predicting subunit and a second determining subunit.

The first determining subunit is configured to determine to-be-used matching text based on the at least one to-be-used sentence and a preset sentence identifier.

The matching predicting subunit is configured to input the to-be-used user record and the to-be-used matching text into a semantic matching model, to obtain a matching prediction result output by the semantic matching model.

The second determining subunit is configured to determine the to-be-used semantic matching result according to the matching prediction result.

In a possible implementation, the semantic matching model includes a word encoding module, a content interaction module, and a matching prediction module.

The matching predicting subunit is specifically configured to determine a user-record encoding feature and at least one sentence encoding feature according to the to-be-used user record, the to-be-used matching text, and the word encoding module; obtain at least one content interaction feature according to the user-record encoding feature, the at least one sentence encoding feature, and the content interaction module; and input the at least one content interaction feature into the matching prediction module, to obtain the matching prediction result output by the matching prediction module.

In a possible implementation, the semantic matching model further includes a sentence encoding module.

The process of determining the at least one content interaction feature includes: inputting the at least one sentence encoding feature into the sentence encoding module, to obtain at least one sentence representation feature output by the sentence encoding module; and obtaining the at least one content interaction feature according to the user-record encoding feature, the at least one sentence representation feature, and the content interaction module.

In a possible implementation, the determining the at least one content interaction feature includes: inputting the user-record encoding feature and the at least one sentence representation feature into the content interaction module, to obtain the at least one content interaction feature output by the content interaction module.

In a possible implementation, the determining the at least one content interaction feature includes: selecting, from the at least one sentence representation feature, at least one to-be-referenced sentence feature satisfying a first similarity condition according to similarity representation data between the user-record encoding feature and each sentence representation feature; and inputting the user-record encoding feature and the at least one to-be-referenced sentence feature into the content interaction module, to obtain the at least one content interaction feature output by the content interaction module.

In a possible implementation, the determining the at least one content interaction feature includes: selecting, from the at least one sentence encoding feature, at least one to-be-processed sentence feature satisfying a second similarity condition according to similarity representation data between the user-record encoding feature and each sentence encoding feature; and inputting the user-record encoding feature and the at least one to-be-processed sentence feature into the content interaction module, to obtain the at least one content interaction feature output by the content interaction module.

In a possible implementation, the content interaction module includes an attention layer and a fusion layer.

In a case that input data of the content interaction module includes the user-record encoding feature and at least one to-be-interacted sentence feature, the determining the at least one content interaction feature includes: inputting the user-record encoding feature and the at least one to-be-interacted sentence feature into the attention layer, to obtain a user-record representation feature output by the attention layer; and determining the at least one content interaction feature according to the user-record representation feature, the at least one to-be-interacted sentence feature, and the fusion layer.

In a possible implementation, the number of to-be-interacted sentence features is E, and a process of determining the e-th content interaction feature, includes: inputting the user-record representation feature and the e-th to-be-interacted sentence feature into the fusion layer, to obtain the e-th content interaction feature output by the fusion layer, where e is a positive integer, e≤E, and E is a positive integer.

In a possible implementation, the process of determining the e-th content interaction feature includes: determining the e-th similarity representation feature and the e-th information-difference representation feature according to the user-record representation feature and the e-th to-be-interacted sentence feature, where the e-th similarity representation feature represents information similarity between the user-record representation feature and the e-th to-be-interacted sentence feature, the e-th information-difference representation feature represents an information differentiation between the user-record representation feature and the e-th to-be-interacted sentence feature; and splicing the user-record representation feature, the e-th to-be-interacted sentence feature, the e-th similarity representation feature, and the e-th information-difference representation feature, to obtain the e-th content interaction feature.

In a possible implementation, the e-th similarity representation feature is determined according to a dot product between the user-record representation feature and the e-th to-be-interacted sentence feature.

In a possible implementation, the e-th information-difference representation feature is determined according to the difference between the user-record representation feature and the e-th to-be-interacted sentence feature.

In a possible implementation, the second determining subunit is specifically configured to: determine the to-be-used semantic matching result according to a to-be-used text search result and the matching prediction result, where the to-be-used text search result is determined according to a preset search algorithm, the to-be-used user record, and the at least one to-be-used sentence.

In a possible implementation, the at least one to-be-used sentence includes at least one semantic matching sentence, and the to-be-used semantic matching result includes a semantic matching score between the to-be-used user record and each semantic matching sentence.

The summary determining device 800 further includes: a matching updating unit configured to select at least one reference sentence satisfying a preset reference condition from the at least one semantic matching sentence according to the semantic matching score between the to-be-used user record and each semantic matching sentence; determine a distance penalty score of each semantic matching sentence according to a text position of the at least one reference sentence and a text position of each semantic matching sentence; and update the semantic matching score between the to-be-used user record and each semantic matching sentence by using the distance penalty score of each semantic matching sentence.

In a possible implementation, the number of semantic matching sentences is E, where E is a positive integer.

A process of determining a distance penalty score of an e-th semantic matching sentence includes: determining a distance set corresponding to the e-th semantic matching sentence based on a distance between a text position of each reference sentence and a text position of the e-th semantic matching sentence; performing preset statistical analysis processing on the distance set corresponding to the e-th semantic matching sentence, to obtain a to-be-used distance corresponding to the e-th semantic matching sentence; and determining the distance penalty score of the e-th semantic matching sentence according to the to-be-used distance corresponding to the e-th semantic matching sentence.

In a possible implementation, the at least one to-be-used sentence includes at least one semantic matching sentence, and the to-be-used semantic matching result includes a semantic matching score between the to-be-used user record and each semantic matching sentence.

The summary determining unit 804 includes: a first selecting subunit and a third determining subunit.

The first selecting subunit is configured to select at least one target sentence satisfying a first matching condition from the at least one semantic matching sentence according to the semantic matching score between the to-be-used user record and each semantic matching sentence.

The third determining subunit is configured to determine the to-be-used minutes content according to the to-be-used user record and the at least one target sentence.

In a possible implementation, the first selecting subunit includes: a second selecting subunit and a third selecting subunit.

The second selecting subunit is configured to select at least one primary sentence satisfying a second matching condition from the at least one semantic matching sentence according to the semantic matching score between the to-be-used user record and each semantic matching sentence.

The third selecting subunit is configured to select the at least one target sentence satisfying a third matching condition from the at least one primary sentence according to a semantic matching score between the to-be-used user record and each primary sentence.

In a possible implementation, the first selecting subunit further includes: a fourth selecting subunit configured to select at least one reselection sentence satisfying a fourth matching condition from the at least one primary sentence according to the number of non-stop words in each primary sentence.

The third screening subunit is specifically configured to select the at least one target sentence satisfying the third matching condition from the at least one reselection sentence according to a semantic matching score between the to-be-used user record and each reselection sentence.

In a possible implementation, a process of determining the at least one target sentence includes: selecting a to-be-deleted sentence satisfying a first deletion condition from at least one candidate sentence according to a semantic matching score between the to-be-used user record and each candidate sentence, to obtain a first selection result; and determining the at least one target sentence based on the first selection result and the at least one candidate sentence.

In a possible implementation, the process of determining the at least one target sentence includes: if the first selection result indicates that there is at least one to-be-deleted sentence in the at least one candidate sentence, determining at least one to-be-retained sentence according to the at least one to-be-deleted sentence and the at least one candidate sentence; and determining the at least one target sentence according to the at least one to-be-retained sentence.

In a possible implementation, the process of determining the at least one target sentence includes: if the at least one candidate sentence satisfies a preset correction condition, selecting at least one to-be-evaluated sentence satisfying a first retention condition from the at least one to-be-deleted sentence; normalizing a semantic matching score between the to-be-used user record and each to-be-evaluated sentence, to obtain a normalized score of each to-be-evaluated sentence; selecting at least one first retained sentence satisfying a second retention condition from the at least one to-be-evaluated sentence according to the normalized score of each to-be-evaluated sentence; deleting the at least one to-be-deleted sentence from the at least one candidate sentence, to obtain at least one second retained sentence; and determining the at least one to-be-retained sentence based on the at least one first retained sentence and the at least one second retained sentence.

In a possible implementation, the third determining subunit includes: a fourth determining subunit and a fifth determining subunit.

The fourth determining subunit is configured to determine at least one key supplementary sentence based on the at least one target sentence, the at least one to-be-used sentence, and a pre-constructed supplementary-sentence determination model, where the supplementary-sentence determination model is configured to perform key supplementary-sentence determination processing on input data of the supplementary-sentence determination model.

The fifth determining subunit is configured to determine the to-be-used minutes content based on the to-be-used user record, the at least one target sentence, and at least one key supplementary sentence.

In a possible implementation, the fourth determining subunit includes: a graph constructing subunit, a supplementary predicting subunit and a sentence supplementing subunit.

The graph constructing subunit is configured to construct a to-be-used graph according to the at least one target sentence and the at least one to-be-used sentence.

The supplementary predicting subunit is configured to input the to-be-used graph into the supplementary-sentence determination model, to obtain a key sentence prediction result output by the supplementary-sentence determination model.

The sentence supplementing subunit is configured to determine the at least one key supplementary sentence based on the key sentence prediction result.

In a possible implementation, the graph constructing subunit is specifically configured to: determine at least one graph node according to the at least one target sentence and the at least one to-be-used sentence, where the at least one graph node includes at least one record-sentence node and at least one candidate-sentence node; construct a neighbor representation edge corresponding to the at least one graph node according to a preset neighbor description parameter; connect each candidate-sentence node with each record-sentence node, to obtain a correlation representation edge corresponding to each candidate-sentence node; and determine the to-be-used graph according to the at least one graph node, the neighbor representation edge corresponding to the at least one graph node, and the correlation representation edge corresponding to the at least one candidate-sentence node.

In a possible implementation, the supplementary-sentence determination model includes a graph attention module and a classification prediction layer.

The supplementary predicting subunit is specifically configured to: determine a to-be-used feature of each graph node in the to-be-used graph; input the to-be-used feature of the at least one graph node and the to-be-used graph into the graph attention module, to obtain a graph attention feature of the at least one graph node output by the graph attention module; and input the graph attention feature of the at least one graph node into the classification prediction layer, to obtain the key sentence prediction result output by the classification prediction layer.

In a possible implementation, the graph attention module includes M graph attention layers, where input data of the first graph attention layer includes a to-be-used feature of the at least one graph node and the to-be-used graph, and input data of the m$_1$-th attention layer includes output data of the mi-1-th attention layer and the to-be-used graph, where mi is a positive integer, $2 \leq m_1 \leq M$, and M is a positive integer.

In a possible implementation, the to-be-used graph includes a neighbor representation edge corresponding to the at least one graph node, where the at least one graph node includes G record-sentence nodes, and the number of graph nodes is R, where R is a positive integer and G is a positive integer.

When input data of the m$_2$-th graph attention layer includes respective unprocessed features of R graph nodes and the to-be-used graph, and output data of the m$_2$-th graph attention layer includes processed features of the R graph nodes, and m$_2$ is a positive integer, $1 \leq m_2 \leq M$, a process of determining the processed feature of the m$_2$-th graph node includes: determining at least one neighbor node corresponding to the r-th graph node according to the neighbor representation edge corresponding to the r-th graph node, where r is a positive integer and r$\leq$R; determining a neighbor attention weight feature of the d$_r$-th neighbor node according to the unprocessed feature of the r-th graph node and the unprocessed feature of the d$_r$-th neighbor node corresponding to the r-th graph node, where d$_r$ is a positive integer, dr$\leq$D$_r$, D$_r$ is a positive integer, and D$_r$ represents the number of neighbor nodes corresponding to the r-th graph node; determining a neighbor fusion feature of the r-th graph node according to unprocessed features of D$_r$ neighbor nodes corresponding to the r-th graph node and neighbor attention weight features of the D$_r$ neighbor nodes corresponding to the r-th graph node; and determining a processed feature of the r-th graph node according to the neighbor fusion feature of the r-th graph node.

In a possible implementation, the at least one graph node further includes at least one candidate-sentence node; and the process of determining the processed feature of the r-th graph node includes: if the r-th graph node belongs to a candidate sentence node, determining an g-th record-sentence attention weight feature corresponding to the r-th graph node according to the unprocessed feature of the r-th graph node and the unprocessed feature of the g-th record-sentence node, where g is a positive integer, g$\leq$G, and G is a positive integer; determining a record fusion feature of the r-th graph node according to unprocessed features of G record-sentence nodes and attention weight features of the G record-sentences corresponding to the r-th graph node; determining a fused information-difference feature of the r-th graph node based on the neighbor fusion feature of the r-th graph node and a record fusion feature of the r-th graph node; splicing the neighbor fusion feature of the r-th graph node with the fused information-difference feature of the r-th graph node, to obtain a fusion splicing feature of the r-th graph node; and determining the processed feature of the r-th graph node based on the fusion splicing feature of the r-th graph node.

In a possible implementation, the fifth determining subunit includes: a key-point extracting subunit and a sixth determining subunit.

The key-point extracting subunit is configured to perform key-point extraction processing on each key supplementary sentence, to obtain key-point content of each key supplementary sentence.

The sixth determining subunit is configured to determine the to-be-used minutes content according to the to-be-used user record, the at least one target sentence, the at least one key supplementary sentence, and the key-point content of the at least one key supplementary sentence.

In a possible implementation, the number of the key supplementary sentences is F, and key-point content of the f-th key supplementary sentence is determined based on the f-th key supplementary sentence and a pre-constructed key extraction model, where the key-point extraction model is configured to perform key-point content extraction processing on input data of the key-point extraction model, f is a positive integer, f$\leq$F, and F is a positive integer.

In a possible implementation, the key-point extraction subunit includes: a seventh determining subunit and a key-point generating subunit.

The seventh determining subunit is configured to determine context information of the f-th key supplementary sentence according to the at least one to-be-used sentence.

The key-point generating subunit is configured to input the f-th key supplementary sentence and the context information of the f-th key supplementary sentence into a key-point extraction model, to obtain the key-point content of the f-th key supplementary sentence output by the key-point extraction model.

In a possible implementation, the context information includes K reference sentences, and the key-point extraction model includes an encoder, a position weighting module, an attention module, a fusion module, and a decoder.

A process of determining the key-point content of the f-th key supplementary sentence includes: performing encoding processing on the f-th key supplementary sentence and each reference sentence by using the encoder respectively, to obtain an encoding feature of the f-th key supplementary sentence and an encoding feature of each reference sentence; inputting encoding features of the K reference sentences into the position weighting module, to obtain position weighting features of the K reference sentences output by the position weighting module; inputting a position weighting feature of the k-th reference sentence and an encoding feature of the f-th key supplementary sentence into the attention module, to obtain the k-th fusion feature corresponding to the f-th key supplementary sentence output by the attention module, where k is a positive integer, k$\leq$K, and K is a positive integer; inputting K fusion features corresponding to the f-th key supplementary sentence into the fusion module, to obtain a representation feature of the f-th key supplementary sentence output by the fusion module; and inputting the representation feature of the f-th key supplementary sentence into the decoder, to obtain the key-point content of the f-th key supplementary sentence output by the decoder.

In a possible implementation, module parameters of the position weighting module include K position weighting vectors, a process of determining the position weighting feature of the k-th reference sentence includes: determining a position excitation weight corresponding to the k-th reference sentence based on a dot product of the k-th position weighting vector and the encoding feature of the k-th reference sentence; and determining a product of the position excitation weight corresponding to the k-th reference sentence and the encoding feature of the k-th reference sentence as the position weighting feature of the k-th reference sentence.

In a possible implementation, the minutes determining unit 804 includes: a prompt determining subunit and a prompt displaying subunit.

The prompt determining subunit is configured to determine prompt information according to the to-be-used user record and the to-be-used semantic matching result.

The prompt displaying subunit is configured to display the prompt information to a user, such that the user writes the to-be-used minutes content with reference to the prompt information.

In a possible implementation, the minutes determining unit 804 further includes: a prompt updating subunit configured to, if the prompt information includes the at least one key supplementary sentence, obtain a current minutes writing sentence input by the user; search for a to-be-deleted supplementary sentence satisfying a fifth matching condition from the at least one key supplementary sentence according to semantic matching representation data between the current minutes writing sentence and each key supplementary sentence, to obtain a search result; if the search result indicates that there is at least one to-be-deleted supplementary sentence in the at least one key supplementary sentence, delete the at least one to-be-deleted supplementary sentence from the at least one key supplementary sentence; and update the prompt information according to the at least one key supplementary sentence, and continuing to perform the displaying the prompt information to the user until a preset stopping condition is reached.

In a possible implementation, the prompt information further includes the key-point content of the at least one key supplementary sentence, and a process of updating the prompt information includes updating the prompt information according to the at least one key supplementary sentence and the key-point content of the at least one key supplementary sentence.

Further, an apparatus is provided in an embodiment of the present application. The apparatus includes a processor, a memory, and a system bus, where the processor and the memory are connected through the system bus; the memory is configured to store one or more programs including instructions. The instructions, when executed by the processor, cause the processor to perform any one of the implementations of the above minutes determining method.

Further, a computer-readable storage medium having instructions stored therein is provided in an embodiment of the present application, where the instructions, when run on a terminal device, cause the terminal device to perform any one of the implementations of the above minutes determining method.

Further, a computer program product is provided in an embodiment of the present application, where the computer program product, when run on a terminal device, causes the terminal device to perform any one of the implementations of the above minutes determining method.

It will be apparent to those skilled in the art from the foregoing description of the embodiments that all or a portion of the steps of the methods of the embodiments described above may be implemented by means of software plus the necessary general hardware platform. Based on such an understanding, the technical solution of the present application, in essence or in part contributing to the existing technologies, may be embodied in a form of a software product, which may be stored in a storage medium, such as a ROM/RAM, a magnetic disk, an optical disk, or the like, including a number of instructions for causing a computer device (which may be a personal computer, a server, or a network communication device such as a media gateway, or the like) to perform the methods described in the various embodiments or certain parts of the embodiments of the present application.

It should be noted that the various embodiments of the present specification are described in a progressive manner, each of which focuses on a difference from other embodiments, and identical parts of the various embodiments may be referred to each other. For the device disclosed in the embodiment, since it corresponds to the method disclosed in the embodiment, the description is relatively simple, and the related contents can refer to description of the method.

It should also be noted that herein, relational terms such as first, second and the like are used merely to distinguish one entity or operation from another entity or operation, without necessarily requiring or implying any such actual relationship or order between such entities or operations. Moreover, the terms "comprise", "include", or any other variation thereof, are intended to cover a non-exclusive inclusion, such that a process, method, article, or apparatus that includes a list of elements includes not only those elements but also other elements not expressly listed, or also includes elements inherent to such process, method, article, or apparatus. Without more limitations, defining an element by a sentence "include a..." is not intended to exclude other identical elements other than this element being included in the process, method, article or apparatus including said elements.

The above description of the disclosed embodiments enables those skilled in the art to implement or use the present application. Various modifications to these embodiments will be apparent to those skilled in the art, and generic principles defined herein may be practiced in other embodiments without departing from the spirit or scope of the present application. Accordingly, the present application is not to be limited to the embodiments shown herein, but complies to the widest scope consistent with the principles and novel features disclosed herein.

**Claims**

1. A minutes determining method, comprising:

   acquiring a to-be-used user record and a to-be-used record text;
   performing sentence segmentation processing on the to-be-used record text, to obtain at least one to-be-used sentence;
   performing semantic matching processing on the to-be-used user record and the at least one to-be-used sentence, to obtain a to-be-used semantic matching result; and
   determining to-be-used minutes content according to the to-be-used user record and the to-be-used semantic matching result.

2. The minutes determining method according to claim 1, wherein the performing semantic matching processing on the to-be-used user record and the at least one to-be-used sentence, to obtain the to-be-used semantic matching result comprises:

   determining to-be-used matching text based on the at least one to-be-used sentence and a preset sentence identifier;
   inputting the to-be-used user record and the to-be-used matching text into a semantic matching model, to obtain a matching prediction result output by the semantic matching model; and
   determining the to-be-used semantic matching result according to the matching prediction result.

3. The minutes determining method according to claim 2, wherein the semantic matching model comprises a word encoding module, a content interaction module, and a matching prediction module, and
   a process of determining the matching prediction result comprises:

   determining a user-record encoding feature and at least one sentence encoding feature according to the to-be-used user record, the to-be-used matching text, and the word encoding module;
   obtaining at least one content interaction feature according to the user-record encoding feature, the at least one sentence encoding feature, and the content interaction module; and
   inputting the at least one content interaction feature into the matching prediction module, to obtain the matching prediction result output by the matching prediction module.

4. The minutes determining method according to claim 3, wherein the semantic matching model further comprises a sentence encoding module, and
   the obtaining at least one content interaction feature according to the user-record encoding feature, the at least one sentence encoding feature, and the content interaction module comprises:

   inputting the at least one sentence encoding feature into the sentence encoding module, to obtain at least one sentence representation feature output by the sentence encoding module; and
   obtaining the at least one content interaction feature according to the user-record encoding feature, the at least one sentence representation feature, and the content interaction module.

5. The minutes determining method according to claim 4, wherein the obtaining the at least one content interaction feature according to the user-record encoding feature, the at least one sentence representation feature, and the content interaction module comprises:
   inputting the user-record encoding feature and the at least one sentence representation feature into the content interaction module, to obtain the at least one content interaction feature output by the content interaction module.

6. The minutes determining method according to claim 4, wherein the obtaining the at least one content interaction feature according to the user-record encoding feature, the at least one sentence representation feature, and the content interaction module comprises:

   selecting, from the at least one sentence representation feature, at least one to-be-referenced sentence feature satisfying a first similarity condition according to similarity representation data between the user-record encoding feature and each sentence representation feature; and

inputting the user-record encoding feature and the at least one to-be-referenced sentence feature into the content interaction module, to obtain the at least one content interaction feature output by the content interaction module.

7. The minutes determining method according to claim 3, wherein the obtaining at least one content interaction feature according to the user-record encoding feature, the at least one sentence encoding feature, and the content interaction module comprises:

selecting, from the at least one sentence encoding feature, at least one to-be-processed sentence feature satisfying a second similarity condition according to similarity representation data between the user-record encoding feature and each sentence encoding feature; and

inputting the user-record encoding feature and the at least one to-be-processed sentence feature into the content interaction module, to obtain the at least one content interaction feature output by the content interaction module.

8. The minutes determining method according to any one of claims 5 to 7, wherein the content interaction module comprises an attention layer and a fusion layer, and

in a case that input data of the content interaction module comprises the user-record encoding feature and at least one to-be-interacted sentence feature, a process of determining the at least one content interaction feature comprises:

inputting the user-record encoding feature and the at least one to-be-interacted sentence feature into the attention layer, to obtain a user-record representation feature output by the attention layer; and

determining the at least one content interaction feature according to the user-record representation feature, the at least one to-be-interacted sentence feature, and the fusion layer.

9. The minutes determining method according to claim 8, wherein a number of to-be-interacted sentence features is E, and

a process of determining an e-th content interaction feature comprises:

inputting the user-record representation feature and an e-th to-be-interacted sentence feature into the fusion layer, to obtain the e-th content interaction feature output by the fusion layer, wherein e is a positive integer, $e \leq E$, and E is a positive integer.

10. The minutes determining method according to claim 2, wherein the determining the to-be-used semantic matching result according to the matching prediction result comprises:

determining the to-be-used semantic matching result according to a to-be-used text search result and the matching prediction result, wherein the to-be-used text search result is determined according to a preset search algorithm, the to-be-used user record, and the at least one to-be-used sentence.

11. The minutes determining method according to claim 1, wherein the at least one to-be-used sentence comprises at least one semantic matching sentence, the to-be-used semantic matching result comprises a semantic matching score between the to-be-used user record and each semantic matching sentence, and

before determining the to-be-used minutes content according to the to-be-used user record and the to-be-used semantic matching result, the method further comprises:

selecting at least one reference sentence satisfying a preset reference condition from the at least one semantic matching sentence according to the semantic matching score between the to-be-used user record and each semantic matching sentence;

determining a distance penalty score of each semantic matching sentence according to a text position of the at least one reference sentence and a text position of each semantic matching sentence; and

updating the semantic matching score between the to-be-used user record and each semantic matching sentence by using the distance penalty score of each semantic matching sentence.

12. The minutes determining method according to claim 11, wherein a number of semantic matching sentences is E, where E is a positive integer, and

a process of determining a distance penalty score of an e-th semantic matching sentence comprises:

determining a distance set corresponding to the e-th semantic matching sentence based on a distance between a text position of each reference sentence and a text position of the e-th semantic matching sentence;

performing preset statistical analysis processing on the distance set corresponding to the e-th semantic matching sentence, to obtain a to-be-used distance corresponding to the e-th semantic matching sentence; and determining the distance penalty score of the e-th semantic matching sentence according to the to-be-used distance corresponding to the e-th semantic matching sentence.

13. The minutes determining method according to claim 1, wherein the at least one to-be-used sentence comprises at least one semantic matching sentence, the to-be-used semantic matching result comprises a semantic matching score between the to-be-used user record and each semantic matching sentence, and the determining to-be-used minutes content according to the to-be-used user record and the to-be-used semantic matching result comprises:

selecting at least one target sentence satisfying a first matching condition from the at least one semantic matching sentence according to the semantic matching score between the to-be-used user record and each semantic matching sentence; and determining the to-be-used minutes content according to the to-be-used user record and the at least one target sentence.

14. The minutes determining method according to claim 13, wherein the selecting at least one target sentence satisfying a first matching condition from the at least one semantic matching sentence according to the semantic matching score between the to-be-used user record and each semantic matching sentence comprises:

selecting at least one primary sentence satisfying a second matching condition from the at least one semantic matching sentence according to the semantic matching score between the to-be-used user record and each semantic matching sentence; and selecting the at least one target sentence satisfying a third matching condition from the at least one primary sentence according to a semantic matching score between the to-be-used user record and each primary sentence.

15. The minutes determining method according to claim 14, further comprising:

selecting at least one reselection sentence satisfying a fourth matching condition from the at least one primary sentence according to a number of non-stop words in each primary sentence, and the selecting the at least one target sentence satisfying a third matching condition from the at least one primary sentence according to a semantic matching score between the to-be-used user record and each primary sentence comprises: selecting the at least one target sentence satisfying the third matching condition from the at least one reselection sentence according to a semantic matching score between the to-be-used user record and each reselection sentence.

16. The minutes determining method according to any one of claims 13 to 15, wherein a process of determining the at least one target sentence comprises:

selecting a to-be-deleted sentence satisfying a first deletion condition from at least one candidate sentence according to a semantic matching score between the to-be-used user record and each candidate sentence, to obtain a first selection result; and determining the at least one target sentence based on the first selection result and the at least one candidate sentence.

17. The minutes determining method according to claim 16, wherein the determining the at least one target sentence based on the first selection result and the at least one candidate sentence comprises:

if the first selection result indicates that there is at least one to-be-deleted sentence in the at least one candidate sentence, determining at least one to-be-retained sentence according to the at least one to-be-deleted sentence and the at least one candidate sentence; and determining the at least one target sentence according to the at least one to-be-retained sentence.

18. The minutes determining method according to claim 17, wherein the determining the at least one to-be-retained sentence according to the at least one to-be-deleted sentence and the at least one candidate sentence comprises:

if the at least one candidate sentence satisfies a preset correction condition, selecting at least one to-be-evaluated sentence satisfying a first retention condition from the at least one to-be-deleted sentence;

normalizing a semantic matching score between the to-be-used user record and each to-be-evaluated sentence, to obtain a normalized score of each to-be-evaluated sentence;

selecting at least one first retained sentence satisfying a second retention condition from the at least one to-be-evaluated sentence according to the normalized score of each to-be-evaluated sentence;

deleting the at least one to-be-deleted sentence from the at least one candidate sentence, to obtain at least one second retained sentence; and

determining the at least one to-be-retained sentence based on the at least one first retained sentence and the at least one second retained sentence.

19. The minutes determining method according to claim 13, wherein the determining the to-be-used minutes content according to the to-be-used user record and the at least one target sentence comprises:

determining at least one key supplementary sentence based on the at least one target sentence, the at least one to-be-used sentence, and a pre-constructed supplementary-sentence determination model, wherein the supplementary-sentence determination model is configured to perform key supplementary-sentence determination processing on input data of the supplementary-sentence determination model; and

determining the to-be-used minutes content based on the to-be-used user record, the at least one target sentence, and at least one key supplementary sentence.

20. The minutes determining method according to claim 19, wherein the determining at least one key supplementary sentence based on the at least one target sentence, the at least one to-be-used sentence, and the pre-constructed supplementary-sentence determination model comprises:

constructing a to-be-used graph according to the at least one target sentence and the at least one to-be-used sentence;

inputting the to-be-used graph into the supplementary-sentence determination model, to obtain a key sentence prediction result output by the supplementary-sentence determination model; and

determining the at least one key supplementary sentence based on the key sentence prediction result.

21. The minutes determining method according to claim 20, wherein the constructing a to-be-used graph according to the at least one target sentence and the at least one to-be-used sentence comprises:

determining at least one graph node according to the at least one target sentence and the at least one to-be-used sentence, wherein the at least one graph node comprises at least one record-sentence node and at least one candidate-sentence node;

constructing a neighbor representation edge corresponding to the at least one graph node according to a preset neighbor description parameter;

connecting each candidate-sentence node with each record-sentence node, to obtain a correlation representation edge corresponding to each candidate-sentence node; and

determining the to-be-used graph according to the at least one graph node, the neighbor representation edge corresponding to the at least one graph node, and the correlation representation edge corresponding to the at least one candidate-sentence node.

22. The minutes determining method according to claim 20, wherein the supplementary-sentence determination model comprises a graph attention module and a classification prediction layer, and

a process of determining the key sentence prediction result comprises:

determining a to-be-used feature of each graph node in the to-be-used graph;

inputting a to-be-used feature of the at least one graph node and the to-be-used graph into the graph attention module, to obtain a graph attention feature of the at least one graph node output by the graph attention module; and

inputting the graph attention feature of the at least one graph node into the classification prediction layer, to obtain the key sentence prediction result output by the classification prediction layer.

23. The minutes determining method according to claim 19, wherein the determining the to-be-used minutes content based on the to-be-used user record, the at least one target sentence, and the at least one key supplementary sentence comprises:

performing key-point extraction processing on each key supplementary sentence, to obtain key-point content of each key supplementary sentence; and

determining the to-be-used minutes content according to the to-be-used user record, the at least one target sentence, the at least one key supplementary sentence, and the key-point content of the at least one key supplementary sentence.

24. The minutes determining method according to claim 23, wherein a number of key supplementary sentences is F, and a process of determining key-point content of an f-th key supplementary sentence comprises:

determining context information of the f-th key supplementary sentence according to the at least one to-be-used sentence, wherein f is a positive integer, f≤F, and F is a positive integer; and

inputting the f-th key supplementary sentence and the context information of the f-th key supplementary sentence into a key-point extraction model, to obtain the key-point content of the f-th key supplementary sentence output by the key-point extraction model.

25. The minutes determining method according to claim 24, wherein the context information comprises K reference sentences, the key-point extraction model comprises an encoder, a position weighting module, an attention module, a fusion module, and a decoder, and a process of determining the key-point content of the f-th key supplementary sentence comprises:

performing encoding processing on the f-th key supplementary sentence and each reference sentence by using the encoder, to obtain an encoding feature of the f-th key supplementary sentence and an encoding feature of each reference sentence;

inputting encoding features of the K reference sentences into the position weighting module, to obtain position weighting features of the K reference sentences output by the position weighting module;

inputting a position weighting feature of a k-th reference sentence and an encoding feature of the f-th key supplementary sentence into the attention module, to obtain a k-th fusion feature corresponding to the f-th key supplementary sentence output by the attention module, wherein k is a positive integer, k≤K, and K is a positive integer;

inputting K fusion features corresponding to the f-th key supplementary sentence into the fusion module, to obtain a representation feature of the f-th key supplementary sentence output by the fusion module; and

inputting the representation feature of the f-th key supplementary sentence into the decoder, to obtain the key-point content of the f-th key supplementary sentence output by the decoder.

26. The minutes determining method according to claim 1, wherein the determining to-be-used minutes content according to the to-be-used user record and the to-be-used semantic matching result comprises:

determining prompt information according to the to-be-used user record and the to-be-used semantic matching result; and

displaying the prompt information to a user, wherein the prompt information provide a reference to writing the to-be-used minutes content by the user.

27. The minutes determining method according to claim 26, wherein after the displaying the prompt information to a user, the method further comprises:

if the prompt information comprises the at least one key supplementary sentence, obtaining a current minutes writing sentence input by the user;

searching for a to-be-deleted supplementary sentence satisfying a fifth matching condition from the at least one key supplementary sentence according to semantic matching representation data between the current minutes writing sentence and each key supplementary sentence, to obtain a search result;

if the search result indicates that there is at least one to-be-deleted supplementary sentence in the at least one key supplementary sentence, deleting the at least one to-be-deleted supplementary sentence from the at least one key supplementary sentence; and

updating the prompt information according to the at least one key supplementary sentence, and continuing to perform the displaying the prompt information to the user until a preset stopping condition is reached.

28. A minutes determining device, comprising:

an information acquiring unit configured to acquire a to-be-used user record and a to-be-used record text;
a text segmenting unit configured to perform sentence segmentation processing on the to-be-used record text, to obtain at least one to-be-used sentence;
a semantic matching unit configured to perform semantic matching processing on the to-be-used user record and the at least one to-be-used sentence, to obtain a to-be-used semantic matching result; and
a minutes determining unit configured to determine to-be-used minutes content according to the to-be-used user record and the to-be-used semantic matching result.

29. An apparatus comprising: a processor, a memory, and a system bus,

wherein the processor and the memory are connected through the system bus; and
the memory is configured to store one or more programs comprising instructions, and the instructions, when executed by the processor, cause the processor to perform the minutes determining method according to any one of claims 1 to 27.

30. A computer-readable storage medium having instructions stored therein, where the instructions, when run on a terminal device, cause the terminal device to perform the minutes determining method according to any one of claims 1 to 27.

```
                                                                                    ┌─ S1
┌──────────────────────────────────────────────────────────────────────────────────┐
│         To-be-used user record and to-be-used record text are acquired             │
└──────────────────────────────────────────────────────────────────────────────────┘
                                          │
                                          ▼                                          ┌─ S2
┌──────────────────────────────────────────────────────────────────────────────────┐
│  Sentence segmentation processing is performed on the to-be-used record text, to   │
│                   obtain at least one to-be-used sentence                           │
└──────────────────────────────────────────────────────────────────────────────────┘
                                          │
                                          ▼                                          ┌─ S3
┌──────────────────────────────────────────────────────────────────────────────────┐
│  Semantic matching processing is performed on the to-be-used user record and the   │
│   at least one to-be-used sentence, to obtain a to-be-used semantic matching result │
└──────────────────────────────────────────────────────────────────────────────────┘
                                          │
                                          ▼                                          ┌─ S4
┌──────────────────────────────────────────────────────────────────────────────────┐
│ To-be-used minutes content is determined according to the to-be-used user record   │
│              and the to-be-used semantic matching result                            │
└──────────────────────────────────────────────────────────────────────────────────┘
```

**FIG. 1**

Yesterday, we reviewed each of our products, i.e., the products currently available and ready for sale, along with the product-line personnel. We went through their entire pricing structure and basic channel policies individually. Today, before the official release, we would like to gather feedback from everyone here, first to determine if the pricing is reasonable, and secondly, to assess the operability of the channel policies. I've updated the materials last night and sent them to your emails. I will now go through these materials in a simple logical order.

Currently, we have approximately seven to eight products listed. The first is the 2.0 version of product XX, which is our software copyright name. Our external quote is XX million, which includes about one hundred standard templates. The software part is followed by hardware such as servers, microphones, optimized custom services, and interface integration. If all documents are to be handled by the customer, the total cost is currently estimated at XX million.

Regarding the channel policies, we have established a unified rule. Based on our software pricing, your company can calculate it as thirty percent of the software price, which is equivalent to thirty percent of the gross profit as the channel fee. This should be feasible for operations, especially if we consider an ex-factory price of XX million for project XX.

Another issue is for all front-line sales. We need to clarify which products can be sold, what new functions they offer, whether we have comparable products, and share case studies. How about we conduct a systematic training session? Things seem a bit disorganized, so if we are to implement this sales strategy, let's streamline everything based on the current status. OK.

I believe today's discussions have been quite good, but I think having a market strategy in place is crucial. Pricing is a significant strategy. We could specify differentiated pricing strategies, focusing on key areas within the national market. Right? We could support key regions and assess the situation there to see if the pricing is appropriate. For instance, we could heavily promote in certain areas and adjust the pricing accordingly to see if it fits.

Meeting Minutes:

Reasonable price, Channel operability

Distinguished pricing, Differentiation

Leak finding and filling

Key-point prompt:
1.Sales strategy is disorganized and needs to be streamlined.

**FIG. 2**

**FIG. 3**

$y_{j-1}$  $y_j$  $y_{j+1}$

$q'$  $S''_{j-1}$  $S''_j$  $S''_{j+1}$

$S'_{j-1}$  $S'_j$  $S'_{j+1}$

Sentence
encoding module

$\hat{q}$  $\hat{S}_{j-1}$  $\hat{S}_j$  $\hat{S}_{j+1}$

BERT  BERT

Word encoding
module

$q = \{w_1, .., w_n\}$  $s_j = \{w_{j,1}, .., w_{j,m}\}$

**FIG. 4**

Sentence

1
2
3
...
k

BERT

(1)

Graph
node

Classifier

(2)

Shorthand
sentence node

**FIG. 5**

**FIG. 6**

**key supplementary-sentence extraction**

Firstly, I want to emphasize that user satisfaction to our service effectiveness is our foundation. If they are not satisfied, our work is meaningless. Calculating economic benefits won't help if we fail to deliver satisfactory services. Our ultimate goal is not just to make money, but to provide excellent services. The revenue we generate should be used to build a better team, ultimately enhancing our service quality.
Secondly, this requires mobilizing everyone. Thirdly, we must find every possible way to provide service. For example, Mr. Ding took me to a badminton court, which is a thirty-minute drive away. Although the traffic was light, the thirty-minute ride felt uncomfortable and long for me. Therefore, we considered opening night sessions, so visitors can leave in the evening, making the travel time worthwhile.

**work must be implemented based on user satisfaction, providing service actively**

**meeting shorthand**

We need to establish a service-oriented mindset. We should combine practical and theoretical approaches, integrating new regulations with old traditions. Our service requirements must be detailed and practical, and we need to effectively organize all logistical tasks. We should aim for lean, standardized operations. I plan to uphold the standards set by the previous leadership and continue their work.
There is a concept called standardized construction, which involves setting standards for many aspects and then standardizing services accordingly. Additionally, we need to establish specific standards for lean and refined services. These are some of the issues we need to address in the future. Overall, we aim not only to increase the quantity of our services but also to improve their quality.
Furthermore, I would like to share a few personal thoughts. We must take performance evaluation very seriously. Evaluations are the product of collective wisdom and serve as a guiding principle, significantly promoting all aspects of our work.

**semantic matching**

Firstly, I want to emphasize that user satisfaction to our service effectiveness is our foundation. If they are not satisfied, our work is meaningless. Calculating economic benefits won't help if we fail to deliver satisfactory services. Our ultimate goal is not just to make money, but to provide excellent services. The revenue we generate should be used to build a better team, ultimately enhancing our service quality.
Secondly, this requires mobilizing everyone. Thirdly, we must find every possible way to provide service. For example, Mr. Ding took me to a badminton court, which is a thirty-minute drive away. Although the traffic was light, the thirty-minute ride felt uncomfortable and long for me. Therefore, we considered opening night sessions, so visitors can leave in the evening, making the travel time worthwhile.
We need to establish a service-oriented mindset. We should combine practical and theoretical approaches, integrating new regulations with old traditions. Our service requirements must be detailed and practical, and we need to effectively organize all logistical tasks. We should aim for lean, standardized operations. I plan to uphold the standards set by the previous leadership and continue their work.
There is a concept called standardized construction, which involves setting standards for many aspects and then standardizing services accordingly. This includes various tasks such as employee duties. It's a good approach, but it also comes with challenges, many of which we face ourselves. We need to clarify what standardized construction, standardized service, and standardized management entail and how they relate to each other. Additionally, we need to establish specific standards for lean and refined services. These are some of the issues we need to address in the future. Overall, we aim not only to increase the quantity of our services but also to improve their quality.

**meeting text**

1.Establish a service-oriented mindset

2.Clarify standards

3.Pay attention to performance evaluation

**Key-point generation**

**key supplementary-sentence extraction and key-point generation**

**key sentences are highlighted and refreshed dynamically**

We need to establish a service-oriented mindset. We should combine practical and theoretical approaches, integrating new regulations with old traditions. Our service requirements must be detailed and practical, and we need to effectively organize all logistical tasks. We should aim for lean, standardized operations. I plan to uphold the standards set by the previous leadership and continue their work.
There is a concept called standardized construction, which involves setting standards for many aspects and then standardizing services accordingly. Additionally, we need to establish specific standards for lean and refined services. These are some of the issues we need to address in the future. Overall, we aim not only to increase the quantity of our services but also to improve their quality.
Furthermore, I would like to share a few personal thoughts. We must take performance evaluation very seriously. Evaluations are the product of collective wisdom and serve as a guiding principle, significantly promoting all aspects of our work.

We need to establish a service-oriented mindset. We should combine practical and theoretical approaches, integrating new regulations with old traditions. Our service requirements must be detailed and practical, and we need to effectively organize all logistical tasks. We should aim for lean, standardized operations. I plan to uphold the standards set by the previous leadership and continue their work.
There is a concept called standardized construction, which involves setting standards for many aspects and then standardizing services accordingly. Additionally, we need to establish specific standards for lean and refined services. These are some of the issues we need to address in the future. Overall, we aim not only to increase the quantity of our services but also to improve their quality.
Furthermore, I would like to share a few personal thoughts. We must take performance evaluation very seriously. Evaluations are the product of collective wisdom and serve as a guiding principle, significantly promoting all aspects of our work.

We need to establish a service-oriented mindset. We should combine practical and theoretical approaches, integrating new regulations with old traditions. Our service requirements must be detailed and practical, and we need to effectively organize all logistical tasks. We should aim for lean, standardized operations. I plan to uphold the standards set by the previous leadership and continue their work.
There is a concept called standardized construction, which involves setting standards for many aspects and then standardizing services accordingly. Additionally, we need to establish specific standards for lean and refined services. These are some of the issues we need to address in the future. Overall, we aim not only to increase the quantity of our services but also to improve their quality.
Furthermore, I would like to share a few personal thoughts. We must take performance evaluation very seriously. Evaluations are the product of collective wisdom and serve as a guiding principle, significantly promoting all aspects of our work.

1.Establish a service-oriented mindset
2.Clarify standards
3.Pay attention to performance evaluation

1.Pay attention to performance evaluation

**key-point text is displayed and refreshed dynamically**

In the meeting, it emphasizes establishing a service-oriented mindset, clarifying service standards, and improving service quality.

In the meeting, it emphasizes establishing a service-oriented mindset, clarifying service standards, and improving service quality. In the meeting, it further indicates to take performance evaluation very seriously and to strengthen the performance evaluation.

Recorder writes the first piece of meeting minute

Recorder writes the second piece of meeting minute

**key supplementary-sentence and key-point prompt are refreshed dynamically**

**FIG. 7**

800

## Minutes determining device

Information acquiring unit — 801

Text segmenting unit — 802

Semantic matching unit — 803

Minutes determining unit — 804

## FIG. 8

## INTERNATIONAL SEARCH REPORT

| | International application No. |
|---|---|
| | **PCT/CN2022/133166** |

**A.  CLASSIFICATION OF SUBJECT MATTER**

G06F16/33(2019.01)i

According to International Patent Classification (IPC) or to both national classification and IPC

**B.  FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 会议, 记录, 纪要, 笔记, 注释, 标注, 文本, 文档, 句, 词, 相似性, 相似度, 语义, 匹配, meeting, minutes, note, text, document, sentence, word, similarity, semantic, match

**C.  DOCUMENTS CONSIDERED TO BE RELEVANT**

| Category* | Citation of document, with indication, where appropriate, of the relevant passages | Relevant to claim No. |
|---|---|---|
| PX | CN 114281948 A (ANHUI TINGJIAN TECHNOLOGY CO., LTD.) 05 April 2022 (2022-04-05)<br>claims 1-30 | 1-30 |
| PX | CN 114328899 A (IFLYTEK CO., LTD.) 12 April 2022 (2022-04-12)<br>description, paragraphs [0041]-[0232] | 1-30 |
| X | CN 109033060 A (IFLYTEK CO., LTD.) 18 December 2018 (2018-12-18)<br>description, paragraphs [0078]-[0199] | 1-2, 10, 13-16, 26, 28-30 |
| A | CN 1624686 A (XEROX CORP.) 08 June 2005 (2005-06-08)<br>entire document | 1-30 |
| A | US 2013054636 A1 (TANG, D. Y.) 28 February 2013 (2013-02-28)<br>entire document | 1-30 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 February 2023** | **10 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

# INTERNATIONAL SEARCH REPORT
### Information on patent family members

International application No.

**PCT/CN2022/133166**

| Patent document cited in search report | | | Publication date (day/month/year) | Patent family member(s) | | | Publication date (day/month/year) |
|---|---|---|---|---|---|---|---|
| CN | 114281948 | A | 05 April 2022 | None | | | |
| CN | 114328899 | A | 12 April 2022 | None | | | |
| CN | 109033060 | A | 18 December 2018 | None | | | |
| CN | 1624686 | A | 08 June 2005 | JP | 2005174325 | A | 30 June 2005 |
| | | | | JP | 4383328 | B2 | 16 December 2009 |
| | | | | US | 2005125219 | A1 | 09 June 2005 |
| | | | | US | 7383171 | B2 | 03 June 2008 |
| US | 2013054636 | A1 | 28 February 2013 | US | 8935265 | B2 | 13 January 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111662331